# EUROPEAN PATENT SPECIFICATION

(11) **EP 1 703 833 B1**
(45) Date of publication and mention of the grant of the patent: **18.08.2010**
(21) Application number: 04814257.4
(22) Date of filing: 15.12.2004
(51) Int. Cl.: A47L 13/16, A47L 13/17, D04H 13/00, B32B 3/30

(54) **HIGHLY TEXTURED NON-WOVEN COMPOSITE WIPE**
STARK STRUKTURIERTES VLIES-VERBUNDWISCHTUCH
LINGETTE COMPOSITE NON TISSEE HAUTEMENT TEXTUREE

(30) Priority: 24.12.2003 US 746860
(43) Date of publication of application: 27.09.2006
(73) Proprietor: KIMBERLY-CLARK WORLDWIDE, INC., Neenah, WI 54956 (US)
(72) Inventor: KOPACZ, Thomas, J., Omro, Wisconsin 54963 (US); ZANDER, Teresa, M., Bonduel, Wisconsin 54107 (US); PAWAR, Pau-Lin, Appleton, Wisconsin 54915 (US); KREMER, Thomas, Appleton, Wisconsin 54911 (US); WRIGHT, Alan, E., Woodstock, Georgia 30188 (US)
(74) Representative: Mabey, Katherine Frances
(86) International application number: PCT/US2004/042051
(87) International publication number: WO 2005/065517

(56) References cited:
- EP-A- 0 865 755
- EP-A- 1 138 471
- FR-A- 2 839 918
- US-A- 4 612 231
- US-A- 4 720 415
- US-A- 4 741 941
- US-A- 4 863 779
- US-A- 5 292 582
- US-A- 5 429 856
- US-A- 6 121 165
- US-A1- 2001 051 479
- US-A1- 2003 171 051
- PATENT ABSTRACTS OF JAPAN vol. 1998, no. 10, 31 August 1998 (1998-08-31) & JP 10 121349 A (TORAY IND INC), 12 May 1998 (1998-05-12)

## Description

### Background of the Invention

Fibrous non-woven materials and fibrous non-woven composite materials are widely used as products, or as components of products, such as dry wipes and wet wipes because they can be manufactured inexpensively and made to have specific characteristics. These products can be manufactured so inexpensively that they can be viewed as disposable, as opposed to reusable.

One approach to making fibrous non-woven materials for wipes is the use of homogeneous mixtures of materials such as air laid webs of fibers mixed with cellulosic fibers or another absorbent material. Other wipes have been prepared by joining different types of non-woven materials in a laminate or formed as a layered structure. These products can be prepared from plastic materials such as plastic sheets, films and non-woven webs, prepared by extrusion processes such as, for example, slot film extrusion, blown bubble film extrusion, meltblowing of non-woven webs and spinbonding.

The non-woven materials and laminated non-woven materials that are useful for consumer products should meet minimum product standards for strength, moisture level, size, flexibility, thickness, softness and texture. However, if one of these parameters is changed this can affect another of the parameters. Thus, a goal for these laminates is to produce a product that can mimic a soft cloth-like feel or at least get closer to a soft cloth-like feel than has been previously possible while still maintaining acceptable strength and texture.

Such a soft cloth-like feel is often characterized by, among other things, one or more of the following: thickness, flexibility, texture, softness, density, and durability of the non-woven materials. These materials are suitable for disposable products such as, for example, disposable diapers, disposable tissues and disposable wipes, for example, disposable dry or wet wipes.

Producing a high quality disposable wipe that is soft, thick and textured like a woven wash cloth, but at a low cost, can be difficult. Textured wipes are known from US-A-2001/0051479 and US-A-5292582.

### Summary of the Invention

The invention is characterized as set out in the independent claims.

For the purposes of the present application, the following terms shall have the following meanings:

As used herein forms of the words "comprise", "have", and "include" are legally equivalent and open-ended. Therefore, additional non-recited elements, functions, steps or limitations may be present in addition to the recited elements, functions, steps, or limitations.

As used herein "wipe" is a flexible sheet or web material, which is useful for household chores, personal care, health care, food wrapping, and cosmetic application or removal. Non-limiting examples of materials suitable for wipes of the present invention include hydroentangled materials, air-entangled materials, paper materials such as tissue, toilet paper, or paper towels, waxed paper materials, coform materials, film or plastic materials such as those used to wrap food, and metal materials such as aluminum foil. Furthermore, laminated or plied together multi-layer materials of two or more layers of any of the preceding materials may be employed. Further examples of suitable wipes include substantially dry wipes (less than 10% by weight of water) containing lathering surfactants and conditioning agents either impregnated into or applied to the wipe such that wetting of the wipe with water prior to use yields a cleansing product. Other suitable materials for wipes may have encapsulated ingredients such that the capsules rupture during dispensing or use. Examples of encapsulated materials include those disclosed in U.S. patents 5,215,757 entitled *Encapsulated Materials* issued to EI-Nokaly on June 1, 1993, and 5,599,555 entitled *Encapsulated Cometic Compositions* issued to EI-Nokaly on February 4, 1997. Other suitable materials for wipes include dry materials that deliver liquid when subjected to in-use shear and compressive forces. Such materials are disclosed in U.S. 6,121,165 entitled *Wet-Like Cleaning Articles* issued to Mackey et al. on September 19, 2000.

As used herein "substantially dry" means that the substrate contains less than about 25 percent water as tested under ASTMD1744-92 entitled "Standard Test Method for Determination of Water in Liquid Petroleum Products by Karl Fischer Reagent" modified as follows: A 500 milligram ± 100 milligram sample is cut from the substrate and weighed on an analytical balance to the nearest 0.1 milligram. Adjust the size of the sample as needed to obtain the specified sample weight. Introduce the sample to the titration vessel and stir approximately 5 minutes to extract the water from the sample. After stirring the sample, titrate as described in the above test procedure and calculate the percent water as described in the above test procedure. In other embodiments of the invention, the substantially dry substrate can contain less than about 20 percent water, less than about 15 percent water, or less than about 10 percent water as tested above.

If the substrate is coated with a chemical or has variations in moisture content depending upon the sample location, a sufficient number of samples from all areas of the substrate should be tested and averaged together to establish within ± 1 percent the average moisture content for the entire substrate. For example, if the chemical coating comprises 30 percent of the surface area of the substrate, numerous samples should be taken from the substrate in both the coated and non-coated areas and tested. To establish the average moisture content of the entire substrate, 30 percent of the samples used in the final average should be from the coated area and the remaining 70 percent of the samples used in the final average should be from the uncoated area.

The term "elastic" as used herein, means any material which, upon application of a biasing force, is stretchable, that is, elongatable at least about 60 percent (i.e., to a stretched, biased length which is at least about 160 percent of its relaxed unbiased length), and which, can recover at least 55 percent of its elongation upon release of the stretching, elongating force. A hypothetical example would be a one (1) cm sample of a material which is elongatable to at least 1.60 cm and which, upon being elongated to 1.60 cm and released, can recover to a length of not more than 1.27 cm. Many elastic materials can be elongated by much more than 60 percent (i.e., much more than 160 percent of their relaxed length), for example, elongated 100 percent or more, and many of these can recover to substantially their initial relaxed length, for example, to within 105 percent of their original relaxed length, upon release of the stretching force.

As used herein, the term "non-elastic" refers to any material which does not fall within the definition of "elastic," above.

As used herein the term "non-woven web" means a structure or a web of material which has been formed without use of weaving processes to produce a structure of individual fibers or threads which are intermeshed, but not in an identifiable, repeating manner. Non-woven webs have been, in the past, formed by a variety of conventional processes such as, for example, meltblowing processes, spinbonding processes, film aperturing processes and staple fiber carding processes.

The terms "recover" and "recovery" as used herein refer to a contraction of a stretched material upon termination of a biasing force following stretching of the material by application of the biasing force. For example, if a material having a relaxed, unbiased length of one (1) cm is elongated 50 percent by stretching to a length of one and one half (1.5) cm the material would be elongated 50 percent (0.5 cm) and would have a stretched length that is 150 percent of its relaxed length. If this exemplary stretched material contracted, that is recovered to a length of one and one tenth (1.1) cm after release of the biasing and stretching force, the material would have recovered 80 percent (0.4 cm) of its one-half (0.5) cm elongation. Recovery can be expressed as [(maximum stretch length-final sample length)/(maximum stretch length-initial sample length)] times 100.

As used herein, the term "meltblown fibers" means fibers formed by extruding a molten thermoplastic material through a plurality of fine, usually circular, die capillaries as molten threads or filaments into a high velocity gas (*e.g*. air) stream which attenuates the filaments of molten thermoplastic material to reduce their diameter, which can be to microfiber diameter. Thereafter, the meltblown fibers are carried by the high velocity gas stream and are deposited on a collecting surface to form a web of randomly disbursed meltblown fibers. Such a process is disclosed, for example, in U.S. Patent No. 3,849,241 to Butin.

As used herein, the term "spunbonded fibers" refers to small diameter fibers which are formed by extruding a molten thermoplastic material as filaments from a plurality of fine, usually circular, capillaries of a spinnerette with the diameter of the extruded filaments then being rapidly reduced as by, for example, eductive drawing or other well-known spunbonding mechanisms. The production of spun-bonded non-woven webs is illustrated in patents such as, for example, in U.S. Patent No. 4,340,563 to Appel et al., and U.S. Patent No. 3,692,618 to Dorschner et al.

As used herein, the term "coform" means a non-woven composite material of air-formed matrix material comprising thermoplastic polymeric meltblown fibers such as, for example, microfibers having an average fiber diameter of less than about 10 microns, and a multiplicity of individualized absorbent fibers such as, for example, wood pulp fibers disposed throughout the matrix of polymer microfibers and engaging at least some of the microfibers to space the microfibers apart from each other. The absorbent fibers are interconnected by and held captive within the matrix of microfibers by mechanical entanglement of the microfibers with the absorbent fibers, the mechanical entanglement and interconnection of the microfibers and absorbent fibers alone forming a coherent integrated fibrous structure. These materials are prepared according to the descriptions in U.S. Patent No. 4,100,324 to Anderson et al. U.S. Patent No. 5,508,102 to Georger et al. and U.S. Patent No. 5,385,775 to Wright.

As used herein, the term "microfibers" means small diameter fibers having an average diameter not greater than about 100 microns, for example, having an average diameter of from about 0.5 microns to about 50 microns, or more particularly, microfibers may have an average diameter of from about 4 microns to about 40 microns.

As used herein, the term "autogenous bonding" means bonding provided by fusion and/or self-adhesion of fibers and/or filaments without an applied external adhesive or bonding agent. Autogenous bonding can be provided by contact between fibers and/or filaments while at least a portion of the fibers and/or filaments are semi-molten or tacky. Autogenous bonding may also be provided by blending a tackifying resin with the thermoplastic polymers used to form the fibers and/or filaments. Fibers and/or filaments formed from such a blend can be adapted to self-bond with or without the application of pressure and/or heat. Solvents may also be used to cause fusion of fibers and filaments which remains after the solvent is removed.

As used herein, the term "machine direction (MD)" refers to the direction of travel of the forming surface onto which fibers are deposited during formation of a non-woven fibrous web.

As used herein, the term "cross-machine direction (CD)" refers to the direction which is essentially perpendicular to the machine direction defined above.

As used herein, the term "tensile strength" refers to the maximum load or force (i.e.. peak load) encountered while elongating the sample to break. Measurements of peak load are made in the machine and cross-machine directions using wet samples.

As used herein, the term "wet wipe" refers to a fibrous sheet which, during its manufacture, has a liquid applied thereto so that the liquid can be retained on or within the fibrous sheet until its utilization by a consumer. The liquid may include a fragrance and/or an emollient and may serve to aid the fibrous sheet in retention of materials which are to be wiped up during its utilization.

As used herein, the terms "stretch-bonded laminate (SBL)" or "composite elastic material" refers to a non-woven fabric including at least one layer of non-woven, elastic material and at least one layer of non-woven, non-elastic material, *e.g*., a gatherable layer. The SBLs of the invention include materials with combinations of layers that include at least one elastic web layer and at least one non-elastic web layer, *e.g*., an elastic layer between two gatherable layers. The elastic non-woven web layer(s) are joined or bonded in at least two locations to the non-elastic non-woven web layer(s). Preferably, the bonding is at intermittent bonding points or areas while the non-woven web layer(s) are in juxtaposed configuration and while the elastic non-woven web layer(s) have a tensioning force applied thereto in order to bring the elastic non-woven web to a stretched condition. Upon removal of the tensioning force after joining of the web layers, an elastic non-woven web layer will attempt to recover to its unstretched condition and will thereby gather the non-elastic non-woven web layer between the points or areas of joining of the two layers. The composite material is elastic in the direction of stretching of the elastic layer during joining of the layers and can be stretched until the gathers of the non-elastic non-woven web or film layer have been removed. A stretch-bonded laminate may include more than two layers. For example, the elastic non-woven web or film may have a non-elastic non-woven web layer joined to both of its sides while it is in a stretched condition so that a three layer non-woven web composite is formed having the structure of gathered non-elastic (non-woven web or film) /elastic (non-woven web or film)/gathered non-elastic (non-woven web or film). Yet other combinations of elastic and non-elastic layers can also be utilized. Such composite elastic materials are disclosed, for example, by U.S. Patent No. 4,720,415 to Vander Wielen et al.*,* and U.S. Patent No. 5,385,775 to Wright.

As used herein "thermal point bonding" involves passing a material such as two or more webs of fibers to be bonded between a heated calender roll and an anvil roll. The calender roll is usually, though not always, patterned in some way so that the entire fabric is not bonded across its entire surface, and the anvil roll is usually flat. As a result, various patterns for calender rolls have been developed for functional as well as aesthetic reasons. In one embodiment of this invention the bond pattern allows void spaces in the machine direction to allow a gatherable layer to gather when the web retracts.

As used herein the term "superabsorbent" refers to a water swellable, substantially insoluble organic or inorganic material capable of absorbing at least 10 times its weight of an aqueous solution containing 0.9 wt % of sodium chloride.

As used herein the term "palindromic" means a multilayer laminate, for example a stretch-bonded laminate, which is substantially symmetrical. Examples of palindromic laminates could have layer configurations of A/B/A, AIB/B/A, A/A/B/B/A/A, A/B/C/B/A, and the like. Examples of non-palindromic layer configurations would include A/B/C, A/B/C/A, A/B/C/D, etc.

As used herein the term "polymer" generally includes, but is not limited to, homopolymers, copolymers, such as, for example, block, graft, random and alternating copolymers, terpolymers, etc. and blends and modifications thereof. Furthermore, unless otherwise specifically limited, the term "polymer" shall include all possible geometrical configurations of the material. These configurations include, but are not limited to, isotactic, syndiotactic and random symmetries.

The present invention provides for increasing the amount of thickness, texture and flexibility of the wipe, without the characteristic increase in basis weight that usually follows, thus allowing for less raw material utilization while obtaining enhance functionality (i.e., a better wipe for less money). Further, the invention provies a highly textured outer layer with an inner layer whereby retraction of the outer layer(s) causes it to pucker and gather in between points bonding the outer layer(s) and inner layer. As such texture upon texture is created, first from the outer layer(s) and then by the composite, which together form wipes of the invention.

For example, in one aspect of the present invention, the wipe, e.g., a composite material or SBL, of the present invention has at least one non-woven inner layer and at least one non-woven outer layer. The outer layer is textured and has a Layer Peak To Valley Ratio greater than 1 and less than about 4 and is bonded to the inner layer at at least two points. The composite elastic material has a Wipe Peak To Valley Ratio greater than 1 and less than about 4. A preferred composite elastic material of the present invention can have a Peak To Valley Ratio, for Wipe and/or Layer, of less than about 3. A more preferred composite elastic material of the present invention can have a Peak To Valley Ratio, for Wipe and/or Layer, of less than about 2.

The problem of lack of softness or cloth-like feel associated with previous disposable wipes has been addressed by the wipes of the present invention, e.g., composite elastic material of the present invention, which are adapted to provide a more cloth like feel than otherwise available. This can be accomplished by providing, e.g., a non-woven composite material or SBL, having a low bending stiffness (*i.e*., increased flexibility) and an increased thickness at a relatively lower basis weight (*i.e*., maximum bulk per unit mass), while maintaining a desired level of strength (*i.e*., sufficient tensile strength in both machine direction, MD, and in cross-machine direction, CD).

For example, in another aspect of the present invention, the wipe, e.g., a composite material or SBL, of the present invention can have a bending stiffness of less than 1 gram force centimeter squared per centimeter ("gf cm²/cm") and greater than 0 gf cm²/cm. A preferred composite elastic material of the present invention can have a bending stiffness of less than about 0.8 gf cm²/cm. A more preferred composite elastic material of the present invention can have a bending stiffness of less than about 0.6 gf cm²/cm. A slightly more preferred composite elastic material of the present invention can have a bending stiffness of less than about 0.4 gf cm²/cm. A much more preferred composite elastic material of the present invention can have a bending stiffness of less than about 0.2 gf cm²/cm.

The wipe, e.g., composite elastic material, of the present invention can have a thickness greater than about 1.5 mm and less than about 5 mm. Preferably, the composite elastic material of the present invention can have a thickness greater than about 2.0 mm. More preferably, the composite elastic material of the present invention can have a thickness greater than about 2.5 mm. Most preferably, the composite elastic material of the present invention can have a thickness greater than about 3.0 mm.

The wipe, e.g., composite elastic material, can have a CD tensile strength of greater than about 308.4 gm and less than about 450 gm. The preferred CD tensile strength is of greater than about 317.5 gm. A more preferred CD tensile strength is of greater than about 340.2 gm. A slightly more preferred CD tensile strength is of greater than about 362.9 gm. A yet more preferred CD tensile strength is of greater than about 385.6 gm. A much more preferred CD tensile strength is of greater than about 408.2 gm. A very much more preferred CD tensile strength is of greater than about 430.9 gm. The most preferred CD tensile strength is of greater than about 453.6 gm.

The wipe, e.g., composite elastic material, of the present invention can have a basis weight of about 75 g/m² to about 150 g/m². Preferably, the composite elastic material can have a basis weight of about 100 to 130 g/m².

### Brief Description of the Figures

Figure 1 is a schematic drawing of an exemplary process for forming a wipe, e.g., composite elastic material, of the present invention.
Figures 2 and 3 are schematic drawings of an exemplary process for preparing a gatherable layer such as coform.
Figure 4 is a schematic drawing of an exemplary process for forming an elastic fibrous web which is a component of the composite elastic material of the present invention.
Figure 5 is a schematic drawing of an exemplary process for the heat treatment of the composite elastic material of the present invention activated by treatment in a heat activator.
Figure 6 is a schematic illustration of a process for the preparation of the composite elastic material of the present invention.
Figure 7 is a representative plan view of a surface portion of a wipe (without texture) and a bonding pattern suitable for bonding the layers of the composite elastic material.
Figure 8 is a schematic view of a testing apparatus for testing a composite according to the present invention.
Figures 9, 10 and 11 show cross sectional views of a portion of a wipe, e.g., composite elastic material, as being measured according to the present invention.
Figure 12 shows a cross sectional view of a portion of a gatherable (outer) layer, as being measured according to the present invention.

### Detailed Description

The present invention provides a wipe such as, for example, a stretch-bonded laminate, which is adapted to provide improved softness and cloth-like feel. This can be accomplished by providing a non-woven composite material having a low Bending Stiffness, while maintaining a desired level of strength and thickness. This composite elastic material includes an elastic fibrous web that can be a composite of elastomeric fiber and elastomeric meltblown fibers.

The wipes of the present invention provide improved softness and cloth-like feel because they have a combination of properties, having a low Bending Stiffness (*i.e*., increased flexibility) and a high thickness at a low relative basis weight (*i.e*., maximum bulk per unit mass), while maintaining a desired level of strength (*i.e*., sufficient tensile strength in both MD and CD) and enhanced texture that were not previously available in wipes. The feel of a wipe is often characterized by one or more of the following attributes of the non-woven materials that comprise them: thickness, flexibility, texture, softness, and durability. In preparing a wipe having a soft cloth-like feel, it is important to balance the properties of the composite material, *e.g*., Bending Stiffness, Thickness, and tensile strength, all in a highly textured wipe. However, this is a difficult task because these properties can be interdependent, *i.e*., changing one property can adversely affect another property (and the overall feel of the wipe). Typically, when the basis weight is decreased, the Thickness is decreased and tensile strength is decreased. When the basis weight is increased then the reverse changes occur, as well as an increase in the Bending Stiffness. Thus, when a property is varied, to enhance the softness or texture and feel, careful attention should be paid to the results obtained to avoid a resultant product having less desirable overall properties.

In light of these difficulties, through experimentation, the inventors have discovered certain properties to selectively isolate and vary to obtain a more cloth-like feel for a non-woven wipe than before possible. In the present invention, the inventors have discovered the basis weight can be maintained the same and the Thickness can be increased while still maintaining the tensile strength, but reducing the Bending Stiffness typically associated with a thicker material. The non-woven wipes of the invention have a Basis Weight of about 100 gsm to 130 gsm; a Bending Stiffness less than 1 gf cm²/cm and a Thickness of greater than about 1.5 mm. Alternatively or additionally, the non-woven wipes of the invention have an outer layer that is textured and has a Layer Peak To Valley Ratio greater than 1 and less than about 4 and which layer is bonded to an inner layer at spaced apart locations and whereby the composite material has a Composite Peak To Valley Ratio greater than 1 and less than about 4.

Each wipe is generally rectangular in shape and may have any suitable unfolded width and length. For example, the wipe may have an unfolded length of from about 2.0 to about 80.0 centimeters and desirably from about 10.0 to about 25.0 centimeters and an unfolded width of from about 2.0 to about 80.0 centimeters and desirably from about 10.0 to about 25.0 centimeters. Preferably, each individual wipe is arranged in a folded configuration and stacked one on top of the other to provide a stack of wipes or interfolded in a configuration suitable for pop-up dispensing. Such folded configurations are well known to those skilled in the art and include c-folded, z-folded, quarter-folded configurations and the like. The stack of folded wipes can be placed in the interior of a container, such as a plastic tub, or card board container to provide a package of wipes for eventual sale to the consumer. Alternatively, the wipes may include a continuous strip of material which has perforations between each wipe and which can be arranged in a stack or wound into a roll for dispensing.

The composite material of the wipes of the present invention includes at least two layers of material having different physical properties. The different physical properties which a layer can be configured to provide by selecting the appropriate materials include softness, resiliency, strength, flexibility, integrity, toughness, absorbency, liquid retention, thickness, tear resistance, surface texture, drapability, hand, wetability, wicking ability and the like and combinations thereof. Preferably, the materials used for the composite material are configured to provide softness and flexibility while maintaining adequate strength, thickness, integrity and resiliency, particularly when wetted. For example, the wipes may include at least one layer of material which is configured to provide strength and resilience to the wipe and at least one other layer which is configured to provide a soft, gentle, textured wiping surface to the wipe. Preferably, the wipes include a soft layer on each side of a strong and resilient layer such that both exposed surfaces of the wipe provide a soft, gentle, textured surface for contact with the skin.

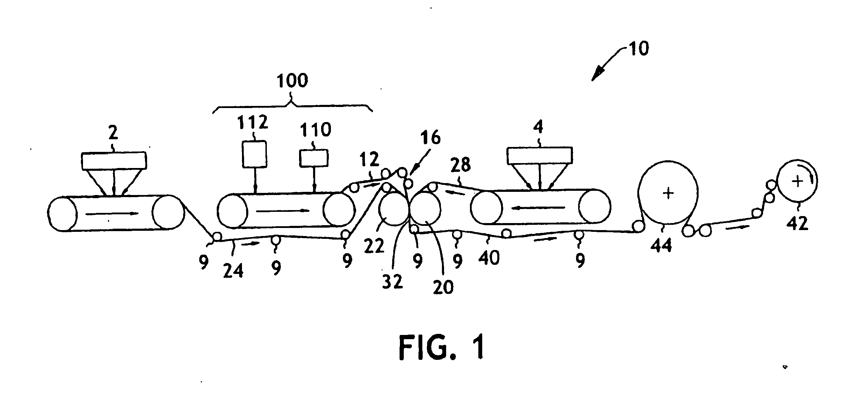

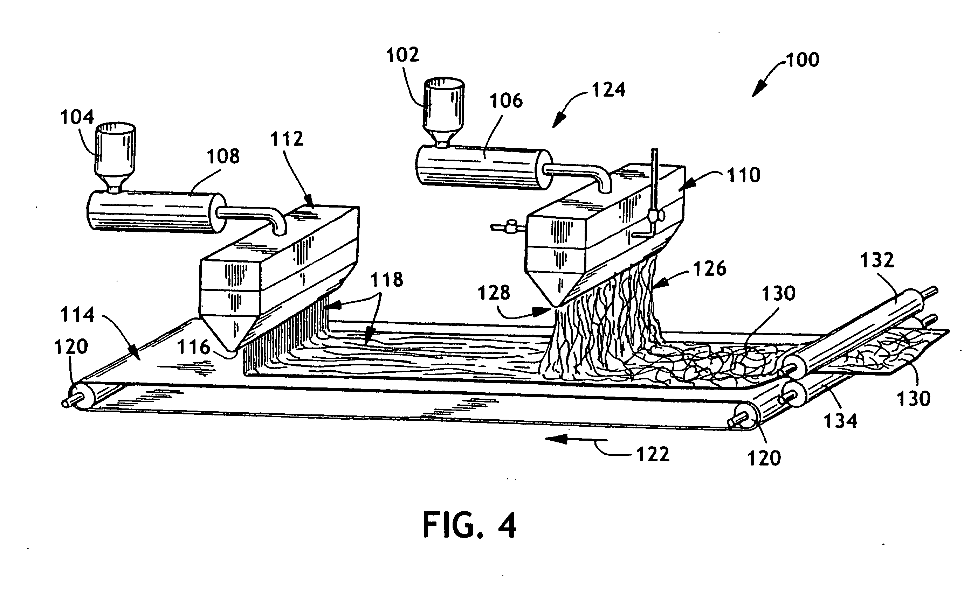

Referring now to the drawings wherein like reference numerals represent the same or equivalent structure and, in particular, to Figure 1 of the drawings there is schematically illustrated a process 10 for forming a wipe material, e.g., a stretch-bonded laminate which includes an elastic fibrous web. Figure 1 illustrates an elastic fibrous web or inner layer 12 prepared in a web forming machine 100, illustrated in detail in Figure 4, which travels in the direction indicated by the arrow associated therewith. The elastic fibrous web layer or inner layer 12 passes through an S-roll arrangement 16 before entering the horizontal calender, having a patterned calender roller 20 and an anvil roller 22. The calender roll can have from 1 to about 30% embossing pin bond area with the preferred area being from about 12 to about 14%. Both the anvil and pattern rollers can be heated to provide thermal point bonding as described above. The temperature and nip forces required to achieve adequate bonding are dependent on the material being laminated. It should be noted that the positions of the calender roller 20 and an anvil roller 22 in Figure 1 are illustrative only and can be reversed.

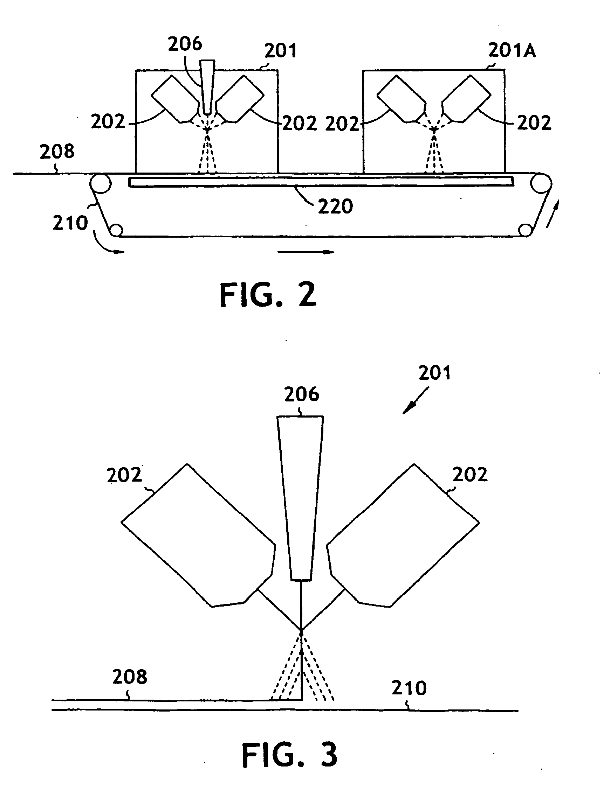

A first gatherable or outer layer 24 and a second gatherable or outer layer 28 are prepared in the coform banks 2 and 4 (illustrated in detail in Figure 2) and are guided and\or tensioned by rollers 9. Figure 1 shows numerous rollers for guiding and\or tensioning the gatherable layers 24 or 28. For clarity of illustration not all rollers are labeled with reference number 9. It will be understood that all schematic depictions of rollers 9, circles in contact with a layer 24 or 28, as well as composite 40, in Figure 1, are rollers 9. The outer layers 24 and 28 further pass through the horizontal calender 20, 22 with the elastic layer 12. The layers are bonded by the calender roller 20 and the anvil roller 22 to form composite 40.

The elastic fibrous web or inner layer 12 passes through the S-rollers 16 in a reverse-S path, as viewed in Figure 1. From the S-roll arrangement, the inner layer 12 passes through the pressure nip 32 formed in the horizontal calender 20, 22 by a bonding roller arrangement. Additional S-roll arrangements (not shown) can be introduced between the illustrated S-roller arrangement and the calender roller arrangement to stabilize the stretched material and to control the amount of stretching. Because the peripheral linear speed of the rollers of the S-roll arrangement is controlled to be less than the peripheral linear speed of the rollers of the calender roller arrangement, the elastic fibrous web 12 is tensioned between the S-roll arrangement and the pressure nip 32 formed in the horizontal calender roller arrangement. The filaments of the elastic fibrous web 12 typically run along the direction that the web is stretched so that they can provide the desired stretch properties in the finished composite material. By adjusting the difference in the speeds of the rollers, the elastic fibrous web is tensioned so that it stretches a desired amount and is maintained in a stretched condition while the gatherable layers 24 and 28 are joined to the elastic fibrous web 12 during their pass through the calender roller arrangement to form a composite elastic material 40. The elastic fibrous web can be stretched in the range of about 75 % (*i.e.,* a 1 cm length can be stretched to 1.75 cm) to about 300 % (*i.e.,* a 1 cm length can be stretched to 4 cm) of its relaxed length. Preferably the web can be stretched in the range of from about 75 % to about 150 % of its relaxed length. More preferably, the web can be stretched to from about 90 % to about 120 % of its relaxed length.

The composite elastic material 40 can be relaxed upon release of the tensioning force provided by the S-roll arrangement and the calender rollers. The gatherable layers are gathered in the composite elastic material 40. The composite elastic material 40 is then wound up on a winder roll 42. Optionally, the composite elastic material 40 is activated by heat treatment in a heat activation unit 44. Processes of making composite elastic materials of this type are described in, for example, U.S. Patent No. 4,720,415 to Vander Wielen et al. and U.S. Patent No. 5,385,775 to Wright. Conventional drive means, *e.g*., electric motors, and other conventional devices which can be utilized in conjunction with the apparatus of Figure 1 are well known and, for purposes of clarity, have not been illustrated in the schematic view of Figure 1.

The material used for practicing the present invention is a non-woven composite material commonly referred to as "coform." Coform is an air-formed matrix material of thermoplastic polymeric meltblown fibers such as, for example, microfibers having an average fiber diameter of less than about 10 microns, and a multiplicity of individualized absorbent fibers such as, for example, wood pulp fibers disposed throughout the matrix of polymer microfibers and engaging at least some of the microfibers to space the microfibers apart from each other. The absorbent fibers are interconnected by and held captive within the matrix of microfibers by mechanical entanglement of the microfibers with the absorbent fibers, the mechanical entanglement and interconnection of the microfibers and absorbent fibers alone forming a coherent integrated fibrous structure.

Figure 2 is a schematic view of an exemplary process for forming a gatherable coform web which can be used as a component of the composite elastic material of the invention. The matrix material comprising thermoplastic polymer microfibers from the extruder banks 201 and 201A of the meltblowing extruders 202, and blending with individualized absorbent fibers from the pulp generator 206 (for bank 201), is depicted. The non-woven web 208 is carried along the forming wire 210 to the calender or wound on a roll. The orientation of banks 201 and 201A corresponds to those for bank(s) 4 seen in Figure 1, and would be reversed for bank(s) 2 in Figure 1.

The gatherable layers can be formed using one or more sets of extruders for providing the microfibers. The microfibers can be formed by extrusion processes such as, for example, meltblowing processes or spunbonding. The coherent integrated fibrous structure can be formed by the microfibers and absorbent fibers, e.g., wood pulp fibers, without any adhesive, molecular or hydrogen bonds between the two different types of fibers. The absorbent.fibers are preferably distributed uniformly throughout the matrix of microfibers to provide a homogeneous material. For example, as seen in Figure 2, the material is formed by simultaneously: (i) directing primary air streams (e.g., with a pressure of about 1.5 pounds per square inch gage ("psig") (10.3 Kpa) to 4 psig (27.5 Kpa)) containing meltblown microfibers (e.g., with a basis weight of about 6 grams per square meter ("gsm") to 15 gsm) onto a forming surface to achieve a concentration of meltblown microfibers at the surface of the material and (ii) (e.g., seen in greater detail in Figure 3) forming primary air streams containing meltblown microfibers, forming a secondary air stream containing the absorbent fibers, merging the primary and secondary streams under turbulent conditions to form an integrated air stream containing a thorough mixture of the microfibers and absorbent fibers, and directing the integrated air stream onto the forming surface with the concentration of meltblown microfibers already thereon to air form the fabric-like material. As such, a preferred fabric-like material (e.g. for gatherable layers 24 and 28) is a single layer relatively homogenous composite material layer with a concentration of polymeric fibers at the outer surface. Various other layer configurations could also be employed such as multilayer constructions of the same or different fibers in each layer and other types of more homogenous to more distinct single layer to multilayer constructions.

The microfibers are in a soft nascent condition at an elevated temperature when they are deposited onto the forming surface and as they are turbulently mixed with the absorbent fibers in air. Further, a below wire air vacuum former 220 draws the near molten microfibers into and through the openings in the forming surface (e.g., made of any foraminous material such as a conventional woven forming wire used for making paper, tissue or non-woven sheets). Such drawing, and particularly for the fibers from extruder bank 201 A, forms a "textured-surface" of the layers 24 and/or 28. This texturing may be as three dimensional cloth-like tufts projecting from the layer's surface and formed in a non-random plurality of spaced apart tufts, each tuft corresponding to an opening in the forming surface. The size and shape of the tuft are dependent upon the type of forming surface used, the types of fibers deposited thereon, the volume of below wire air vacuum used to draw the fibers into the forming surface, and other related factors. For example, the tufts could be made to project from the material's surface in the range of about 1 mm to at least about 5 mm (as measured in conjunction with the Test Methods herein).

The forming surface 210 can be any type of belt or wire, such as a highly permeable wire. Wire geometry and processing conditions may be used to after the texture or tufts of the material. The particular choice will depend on the desired tuft size, shape, depth, surface density (tufts/area), and the like. One skilled in the art could easily determine without undue experimentation the judicious balance of attenuating air and below-wire-vacuum required to achieve the desired tuft dimensions and properties. Generally, however, since a wire may be used to provide the actual tufts, it is important to use a highly permeable wire to allow material to be drawn through the wire to form the tufts which texture the surface of the layer. In one aspect, the wire can have an open area of between about 40% and about 60%, more particularly about 45% to about 55%, and more particularly about 49% to about 51 %. This is as compared with prior art nonwoven wires that are very dense and closed, having open areas less than about 40%, since primarily only air is pulled through the wire for the purpose of helping to hold the nonwoven material being formed on the wire.

In an exemplary aspect, the forming wire is a "Formtech™ 6" wire manufactured by Albany International Co. in Albany, New York. Such a wire has a "mesh count" of about six by eight strands per inch (about 2.4 by 3.1 strands per cm), i.e., resulting in 48 tufts per square inch (about 18.9 tufts per cm), a warp diameter of about one (1) mm polyester, a shute diameter of about 1.07 mm polyester, a nominal air perm of approximately 41.8 m³/min (1475 ft³/min), a nominal caliper of about 0.2 cm (0.08 in) and an open area of approximately 51%. It is within the scope of the invention that alternate forming wires and surfaces (e.g. drums, plates, etc.) may be employed. Also, surface variations may include, but are not limited to, alternate weave patterns, alternate strand dimensions, coatings, static dissipation treatments, and the like.

The length or height of each tuft which forms the texture of the outer layer is measured as the distance from the peak of the tuft to a base formed by the plane defined by a valley surrounding the peak. This dimension is best measured after formation of the tufted layer and removal of the layer from the porous forming surface, but prior to lamination of the tufted layer with any other layer. Particularly, tuft length is best determined after removing the tufted layer from the forming surface and after allowing the layer to equilibrate to standard room temperature and humidity for about one hour, although the invention is not so limited. Under such conditions, however, and in order of increasing advantage, such dimension can be at least about one (1) mm, at least about two (2) mm, at least about three (3) mm, or between about three (3) mm and about five (5) mm.

In another aspect of the invention, the protrusions or projections that form the tufts are configured in an identifiable pattern that can advantageously be a substantially uniform pattern across the surface of the tufted layer. Without being limited to a particular theory of operation, it is believed that the distribution of the tufts can be controlled, as desired, to produce a composite and layer of the invention such that when there are more tufts per square area, the less steep the walls of each tuft may need to be to provide the desired resilience to the layer and prevent collapse of the tuft under load. Stated similarly, the more steep the walls of the tufts, the less likely the tufts are to buckle or collapse under a load. As a result, the tufts can be spaced further apart and still provide the desired resilience to the layer and prevent collapse thereof.

In one aspect, a coating is applied to the forming surface. This can include, but is not limited to, silicone, fluorochemical coatings, etc. In another aspect mechanical or pneumatic devices are used to aid in release. These include, but are not limited to, driven pick-off/S-wrap rolls (i.e., a roll or assembly of rolls in close proximity to the downstream edge of the forming surface which, when driven at a higher speed than the forming surface, facilitates removal from the forming surface), air knife(s) (i.e., an assembly which provides a concentrated line or blade of high velocity air from underneath the forming surface thereby pneumatically removing the web from the forming surface), or other techniques which result in release of the web from the wire. In yet another aspect, conventional bi-component meltblown can be used. In yet another aspect a sufficient amount of pulp can be added to the polymer forming the tufts to aid in release but not interfere with desired feature(s) of the tufted texture as taught herein (e.g., less than about 25% pulp). It should be appreciated that any combination of the above aspects can also be used, as warranted by a particular application. Also, additional teaching of techniques and particulars for forming the texture of outer layers 24 and 28 is found in U.S. Patent Application US-2003-0073367-A1, published April 17, 2003 and titled "Internally Tufted Laminator and Methods of Producing Same."

Non-limiting examples of the polymers suitable for practicing the invention are polyolefin materials such as, for example, polyethylene, polypropylene and polybutylene, including ethylene copolymers, propylene copolymers and butylene copolymers thereof. A particularly useful polypropylene is BaseII PF-015. Additional polymers are disclosed in U.S. Pat. No. 5,385,775.

Fibers of diverse natural origin are applicable to the invention. Digested cellulose fibers from softwood (derived from coniferous trees), hardwood (derived from deciduous trees) or cotton linters can be utilized. Fibers from Esparto grass, bagasse, kemp, flax, and other lignaceous and cellulose fiber sources may also be utilized as raw material in the invention. For reasons of cost, ease of manufacture and disposability, preferred fibers are those derived from wood pulp (i.e., cellulose fibers). A commercial example of such a wood pulp material is available from Weyerhaeuser as CF-405. Generally wood pulps can be utilized. Applicable wood pulps include chemical pulps, such as Kraft (i.e., sulfate) and sulfite pulps, as well as mechanical pulps including, for example, groundwood, thermomechanical pulp (*i.e*., TMP) and chemithermomechanical pulp (i.e., CTMP). Completely bleached, partially bleached and unbleached fibers are useful herein. Also useful in the present invention are fibers derived from recycled paper, which can contain any or all of the above categories as well as other non-fibrous materials such as fillers and adhesives used to facilitate the original paper making process.

In one embodiment the gatherable layers 24 and 28 are coform layers having from 20-50 wt. % of polymer fibers and 80-50 wt. % of pulp fibers. A preferred ratio of polymer fibers to pulp fibers can be from 25-45 wt. % of polymer fibers and 75-55 wt. % of pulp fibers. A more preferred ratio of polymer fibers to pulp fibers can be from 30-40 wt. % of polymer fibers and 70-60 wt. % of pulp fibers. The most preferred ratio of polymer fibers to pulp fibers is from about 40 wt. % of polymer fibers and about 60 wt. % of pulp fibers.

The gatherable layers 24 and 28 can be joined to the elastic fibrous web 12 at least at two places by any suitable means such as, for example, thermal bonding or ultrasonic welding which softens at least portions of at least one of the materials, usually the elastic fibrous web because the elastomeric materials used for forming the elastic fibrous web 12 may have a lower softening point than the components of the gatherable layers 24 and 28. Joining can be produced by applying heat and/or pressure to the overlaid elastic fibrous web 12 and the gatherable layers 24 and 28 by heating these portions (or the overlaid layer) to at least the softening temperature of the material with the lowest softening temperature to form a reasonably strong and permanent bond between the re-solidified softened portions of the elastic fibrous web 12 and the gatherable layers 24 and 28.

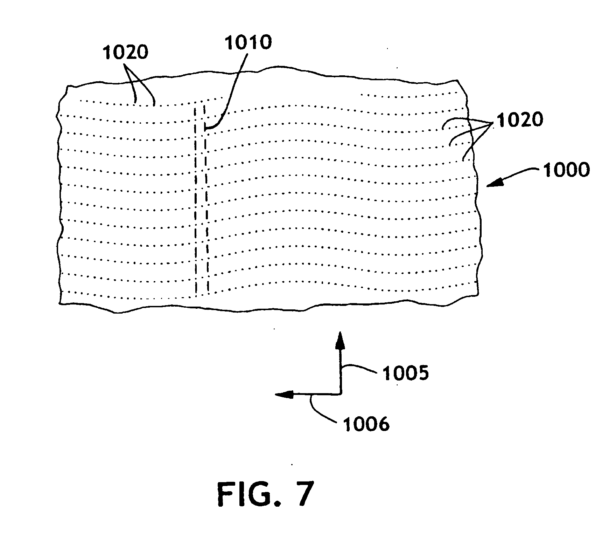

The bonding roller arrangement 20, 22 includes a smooth anvil roller 22 and a patterned calender roller 20, such as, for example, a pin embossing roller arranged with a smooth anvil roller. One or both of the smooth anvil roller and the calender roller can be heated and the pressure between these two rollers can be adjusted by well-known structures to provide the desired temperature, if any, and bonding pressure to join the gatherable layers to the elastic fibrous web. As can be appreciated, the bonding between the gatherable layers and the elastic sheet is a point bonding. Various bonding patterns can be used, depending upon the desired tactile properties of the final composite laminate material. The bonding points are preferably evenly distributed over the bonding area of the composite material. One example of the bonding of the gatherable layer(s) and the elastic layer is explained below in conjunction with Figure 7.

With regard to thermal bonding, one skilled in the art will appreciate that the temperature to which the materials, or at least the bond sites thereof, are heated for heat-bonding will depend not only on the temperature of the vacuum roller(s) or other heat sources but on the residence time of the materials on the heated surfaces, the compositions of the materials, the basis weights of the materials and their specific heats and thermal conductivities. Typically, the bonding can be conducted at a temperature of from about 40° to about 85° C. Preferably, the bonding can be conducted at a temperature of from about 65° to about 80° C. More preferably, the bonding can be conducted at a temperature of from about 70° to about 80° C. The typical pressure range, on the rollers, can be from about 18 to about 56.8 Kg per linear cm (KLC) The preferred pressure range, on the rollers, can be from about 18 to about 24 Kg per linear cm (KLC) However, for a given combination of materials, and in view of the herein contained disclosure the processing conditions necessary to achieve satisfactory bonding can be readily determined by one of skill in the art.

One component of the composite elastic material 40 is the elastic fibrous web or inner layer 12. The elastic web can be a web comprising a homogenous orientation of meltblown fibers (e.g., random, patterned or a mixture of these) or the web can contain two or more orientations of fibers; where at least one orientation can be randomly laid elastomeric meltblown fibers and at least one orientation can contain substantially parallel rows of elastomeric fibers (or "filaments" for purpose of distinguishing between the other fibers of this material) autogenously bonded to at least a portion of the elastomeric meltblown fibers. The elastomeric fibers can have an average diameter ranging from about 40 to about 750 microns and extend along length (*i.e*. machine direction) of the fibrous web. The elastomeric fibers can have an average diameter in the range from about 50 to about 500 microns, for example, from about 100 to about 200 microns.

The elastic filaments extending along the length (*i.e*., MD) of the fibrous web increases the tensile modulus about 10% more than the tensile modulus of the fibrous web in the CD direction. For example, the tensile modulus of an elastic fibrous web can be about 20 % to about 90 % greater in the MD than the tensile modulus of a substantially isotropic non-woven web having about the same basis weight containing only elastomeric meltblown fibers. This increased MD tensile modulus increases the amount of retraction that can be obtained for a given basis weight of the composite elastic material.

The elastic fibrous web can contain at least about 20 percent, by weight, of elastomeric fibers. For example, the elastic fibrous web can contain from about 20 percent to about 100 percent, by weight, of the elastomeric fibers. Preferably, the elastomeric fibers can constitute from about 20 to about 60 percent, by weight, of the elastic fibrous web. More preferably, the elastomeric fibers can constitute from about 20 to about 40 percent, by weight, of the elastic fibrous web. Similarly, the portion of the elastic fibrous web that is not elastomeric fibers is made up of elastomeric filaments or other desired fibers to form the balance of the elastic web.

Figure 4 is a schematic view of a system 100 for forming an elastic fibrous web which can be used as a component of the composite elastic material of the present invention. In forming the fibers which are used in the elastic fibrous web, pellets or chips, etc. (not shown) of an extrudable elastomeric polymer are introduced into pellet hoppers 102 and 104 of extruders 106 and 108. Each extruder has an extrusion screw (not shown) which is driven by a conventional drive motor (not shown). As the polymer advances through the extruder, due to rotation of the extrusion screw by the drive motor, it is progressively heated to a molten state. Heating the polymer to the molten state can be accomplished in a plurality of discrete steps with its temperature being gradually elevated as it advances through discrete heating zones of the extruder 106 toward a meltblowing die 110, and the extruder 108 toward a continuous filament forming unit 112. The meltblowing die 110 and the continuous filament forming unit 112 can be yet another heating zone where the temperature of the thermoplastic resin is maintained at an elevated level for extrusion. Heating of the various zones of the extruders 106 and 108 and the meltblowing die 110 and the continuous filament forming unit 112 can be achieved by any of a variety of conventional heating arrangements (not shown).

The elastomeric filament component of the elastic fibrous web can be formed utilizing a variety of extrusion techniques. For example, the elastic filaments can be formed utilizing one or more conventional meltblowing die units which have been modified to remove the heated gas stream (i.e., the primary air stream) which flows generally in the same direction as that of the extruded threads to attenuate the extruded threads. This modified meltblowing die unit 112 usually extends across a foraminous collecting surface 114 in a direction which is substantially transverse to the direction of movement of the collecting surface 114. The modified die unit 112 includes a linear array 116 of small diameter capillaries aligned along the transverse extent of the die with the transverse extent of the die being approximately as long as the desired width of the parallel rows of elastomeric fibers which is to be produced. That is, the transverse dimension of the die is the dimension which is defined by the linear array of die capillaries. Typically, the diameter of the capillaries can be on the order of from about 0.025 cm (0.01 in) to about 0.076 cm (0.03 in). Preferably, the diameter of the capillaries can be from about 0.0368 cm (0.0145 in) to about 0.0711 cm (0.028 in). More preferably, the diameter of the capillaries can be from about 0.06 cm (0.023 in) to about 0.07 cm (0.028 in). From about 5 to about 50 such capillaries can be provided per linear inch of die face. Typically, the length of the capillaries can be from about 0.127 cm (0.05 in) to about 0.508 cm (0.20 in). Typically, the length of the capillaries can be about 0.287 cm (0.113 in) to about 0.356 cm (0.14 in) long. A meltblowing die can extend from about 51 cm (20 in) to about 185 or more cm (about 72 in) in length in the transverse direction. One familiar with the art would realize that the capillaries could be a shape other than circular, such as, for example, triangular, rectangular, and the like; and that the spacing or density of the capillaries can vary across the length of the die.

Since the heated gas stream (i.e., the primary air stream) which flows past the die tip is greatly reduced or absent, it is desirable to insulate the die tip or provide heating elements to ensure that the extruded polymer remains molten and flowable while in the die tip. Polymer is extruded from the array 116 of capillaries in the modified die unit 112 to create extruded elastomeric fibers 118. The extruded elastomeric filaments 118 have an initial velocity as they leave the array 116 of capillaries in the modified die unit 112. These fibers 118 are deposited upon a foraminous surface 114 which should be moving at least at the same velocity as the initial velocity of the elastic fibers 118. This foraminous surface 114 is an endless belt conventionally driven by rollers 120. The fibers 118 are deposited in substantially parallel alignment on the surface of the endless belt 114 which is rotating as indicated by the arrow 122 in Figure 4. Vacuum boxes (not shown) can be used to assist in retention of the matrix on the surface of the belt 114. The tip of the die unit 112 is as close as practical to the surface of the foraminous belt 114 upon which the continuous elastic fibers 118 are collected. For example, this forming distance can be from about 2 inches to about 10 inches. Desirably, this distance is from about 2 inches to about 8 inches.

It may be desirable to have the foraminous surface 114 moving at a speed that is much greater than the initial velocity of the elastic fibers 118 in order to enhance the alignment of the fibers 118 into substantially parallel rows and/or elongate the fibers 118 so they achieve a desired diameter. For example, alignment of the elastomeric fibers 118 can be enhanced by having the foraminous surface 114 move at a velocity from about 2 to about 10 times greater than the initial velocity of the elastomeric fibers 118. Even greater speed differentials can be used if desired. While different factors can affect the particular choice of velocity for the foraminous surface 114, it will typically be from about four to about eight times faster than the initial velocity of the elastomeric fibers 118. Desirably, the continuous elastomeric filaments are formed at a density per inch of width of material which corresponds generally to the density of capillaries on the die face. For example, the filament density per inch of width of material may range from about 10 to about 120 such fibers per inch width of material. Typically, lower densities of fibers (e.g., 10-35 fibers per inch of width) can be achieved with only one filament forming die. Higher densities (e.g., 35-120 fibers per inch of width) can be achieved with multiple banks of filament forming equipment.

The meltblown fiber component of the elastic fibrous web is formed utilizing a conventional meltblowing device 124. Meltblowing device 124 generally extrudes a thermoplastic polymer resin through a plurality of small diameter capillaries of a meltblowing die as molten threads into a heated gas stream (the primary air stream) which is flowing generally in the same direction as that of the extruded threads so that the extruded threads are attenuated, i.e., drawn or extended, to reduce their diameter. Such meltblowing techniques, and apparatus therefor, are discussed fully in U.S. Patent No. 4,663,220 to Wisneski et al.

In the meltblown die arrangement 110, the position of air plates which, in conjunction with a die portion define chambers and gaps, can be adjusted relative to the die portion to increase or decrease the width of the attenuating gas passageways so that the volume of attenuating gas passing through the air passageways during a given time period can be varied without varying the velocity of the attenuating gas. Generally speaking, lower attenuating gas velocities and wider air passageway gaps are generally preferred if substantially continuous meltblown fibers or microfibers are to be produced. The two streams of attenuating gas converge to form a stream of gas which entrains and attenuates the molten threads, as they exit the orifices, into fibers depending upon the degree of attenuation, microfibers, of a small diameter which is usually less than the diameter of the orifices. The gas-borne fibers or microfibers 126 are blown, by the action of the attenuating gas, onto a collecting arrangement which, in the embodiment illustrated in Figure 4, is the foraminous endless belt 114 which carries the elastomeric filament in substantially parallel alignment. The fibers or microfibers 126 are collected as a coherent matrix of fibers on the surface of the elastomeric fibers or filaments 118 and foraminous endless belt 114, which is rotating clockwise as indicated by the arrow 122 in Figure 4. If desired, the meltblown fibers or microfibers 126 can be collected on the foraminous endless belt 114 at numerous impingement angles. Vacuum boxes (not shown) can be used to assist in retention of the matrix on the surface of the belt 114. Typically the tip 128 of the die 110 is from about 6 inches to about 14 inches from the surface of the foraminous belt 114 upon which the fibers are collected. The entangled fibers or microfibers 124 autogenously bond to at least a portion of the elastic continuous fibers 118 because the fibers or microfibers 124 are still somewhat tacky or molten while they are deposited on the elastic continuous fibers 118, thereby forming the elastic fibrous web 130. The fibers are quenched by allowing them to cool to a temperature below about 38° C.

As discussed above, the elastomeric filaments and elastomeric meltblown fibers can be deposited upon a moving foraminous surface. In one embodiment of the invention, meltblown fibers can be formed directly on top of the extruded elastomeric filaments thereby forming a single layer which includes two different fiber orientations. Alternatively, other layer configurations could be employed such as multilayer constructions of the same or different fibers/filaments in each layer and other types of single and multilayer constructions. This is achieved by passing the fibers and the foraminous surface under equipment which produces meltblown fibers. Also, various combinations of filament forming and fiber forming equipment can be set up to produce different types of elastic fibrous webs.

The elastomeric meltblown fibers and elastomeric fibers can be made from any material that can be manufactured into such fibers such as natural polymers or synthetic polymers. Generally, any suitable elastomeric fiber forming resins or blends containing the same can be utilized for the elastomeric meltblown fibers and any suitable elastomeric filament forming resins or blends containing the same can be utilized for the elastomeric fibers. The fibers can be formed from the same or different elastomeric resin. For example, the elastomeric meltblown fibers and/or the elastomeric fibers can be made from block copolymers having the general formula A-B-A' where A and A' are each a thermoplastic polymer endblock which can contain a styrenic moiety such as a poly (vinyl arene) and where B is an elastomeric polymer midblock such as a conjugated diene or a lower alkene polymer. The block copolymers can be, for example, (polystyrene/poly(ethylene-butylene)/polystyrene) block copolymers available from the Shell Chemical Company under the trademark KRATON R^{™} G. One such block copolymer can be, for example, KRATON R^{™} G-1657. Other exemplary elastomeric materials which can be used include polyurethane elastomeric materials such as, for example, those available under the trademark ESTANE from B. F. Goodrich & Co., polyamide elastomeric materials such as, for example, those available under the trademark PEBAX from the Rilsan Company, and polyester elastomeric materials such as, for example, those available under the trade designation Hytrel from E. I. DuPont De Nemours & Company. Formation of elastomeric meltblown fibers from polyester elastic materials is disclosed in, for example, U.S. Patent No. 4,741,949. Useful elastomeric polymers also include, for example, elastic copolymers of ethylene and at least one vinyl monomer such as, for example, vinyl acetates, unsaturated aliphatic monocarboxylic acids, and esters of such monocarboxylic acids. The elastic copolymers and formation of elastomeric meltblown fibers from those elastic copolymers are disclosed in, for example, U.S. Patent No. 4,803,117 to Daponte. Also, suitable elastomeric polymers are those prepared using metallocene catalysts such as those disclosed in International Application WO 00/48834.

Processing aids can be added to the elastomeric polymer. For example, a polyolefin can be blended with the elastomeric polymer (*e.g*., the A-B-A elastomeric block copolymer) to improve the processability of the composition. The polyolefin must be one which, when so blended and subjected to an appropriate combination elevated pressure and elevated temperature conditions, is extrudable, in blended form, with the elastomeric polymer. Useful blending polyolefin materials include, for example, polyethylene, polypropylene and polybutylene, including ethylene copolymers, propylene copolymers and butylene copolymers. A particularly useful polyethylene can be obtained from the U.S.I. Chemical Company under the trade designation Betrothing NA 601 (also referred to herein as PE NA 601 or polyethylene NA 601). Two or more of the polyolefins can be utilized. Extrudable blends of elastomeric polymers and polyolefins are disclosed in, for example, previously referenced U.S. Patent No. 4,663,220.

The elastomeric meltblown fibers and/or the elastomeric filaments can have some tackiness adhesiveness to enhance autogenous bonding. For example, the elastomeric polymer itself can be tacky when formed into fibers or, optionally, a compatible tackifying resin can be added to the extrudable elastomeric compositions described above to provide tackified elastomeric fibers and/or fibers that autogenously bond. In regard to the tackifying resins and tackified extrudable elastomeric compositions, note the resins and compositions as disclosed in U.S. Patent No. 4,787,699, to Moulin. Any tackifier resin can be used which is compatible with the elastomeric polymer and can withstand the high processing (e.g., extrusion) temperatures. If the elastomeric polymer (e.g., A-B-A elastomeric block copolymer) is blended with processing aids such as, for example, polyolefins or extending oils, the tackifier resin should also be compatible with those processing aids. Generally, hydrogenated hydrocarbon resins are preferred tackifying resins, because of their better temperature stability. Composite elastic material REGALREZ^{™} and ARKON^{™} series tackifiers are examples of hydrogenated hydrocarbon resins. ZONATAK^{™}501 Lite is an example of a terpene hydrocarbon. REGALREZ^{™} hydrocarbon resins are available from Hercules incorporated. ARKON^{™} series resins are available from Arakawa Chemical (U.S.A.) Inc. The present invention is not limited to use of these tackifying resins, and other tackifying resins which are compatible with the other components of the composition and can withstand the high processing temperatures, can also be used.

Typically, the blend used to form the elastomeric fibers include, for example, from about 40 to about 95 percent by weight elastomeric polymer, from about 5 to about 40 percent polyolefin and from about 5 to about 40 percent resin tackifier. For example, a particularly useful composition included, by weight, about 61 to about 65 percent KRATON^{™} G-1657, about 17 to about 23 percent polyethylene polymer, and about 15 to about 20 percent Composite elastic material REGALREZ^{™} 1126. The preferred polymers are metallocene catalyzed polyethylene polymers, such as, for example Affinity^{®} polymers, available from Dow^{®} Chemical Company as Affinity XUS59400.03L. The elastomeric meltblown fiber component of the present invention can be a mixture of elastic and non-elastic fibers or particulates. For example, such a mixture, is disclosed in U.S. Patent No. 4,209,563 to Sisson, where elastomeric and non-elastomeric fibers are commingled to form a single coherent web of randomly dispersed fibers. Another example of such an elastic composite web could be made by a technique disclosed in previously cited U.S. Patent No. 4,741,949 to Morman et al. This patent discloses an elastic non-woven material which includes a mixture of meltblown thermoplastic fibers and other materials. The fibers and other materials are combined in the gas stream in which the meltblown fibers are borne so that an intimate entangled commingling of meltblown fibers and other materials, *e.g*., wood pulp, staple fibers or particulates such as, for example, activated charcoal, clays, starches, or hydrocolloid (hydrogel) particulates commonly referred to as super-absorbents occurs prior to collection of the fibers upon a collecting device to form a coherent web of randomly dispersed fibers.

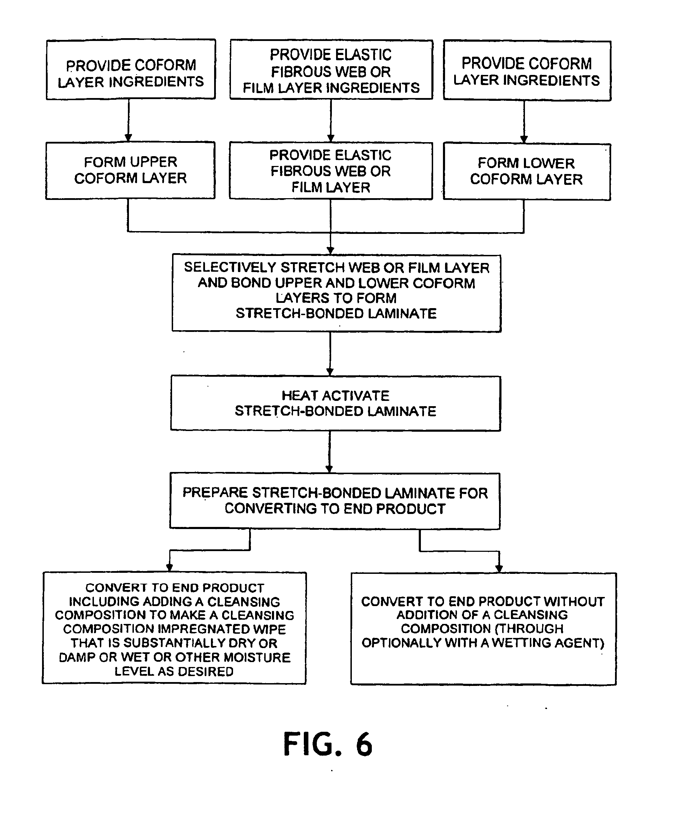

Figure 6 shows a flowchart representing steps for producing an exemplary, though not limiting, composite or laminate according to the present invention. It is believed that these steps are described herein and further description is not necessary.

The invention will now be illustrated by the following non-limiting Examples.

### EXAMPLE 1

Wipes were made as described in the present application. Each wipe contained a three-layer laminate composite elastic material, which included two gatherable outside textured-surface coform layers and in inner elastomeric core layer.

### Elastomeric Core

The elastomeric layer in this example is produced using a two bank meltblown process and a single continuous speed foraminous belt. The first bank of the meltblown process was setup to extrude elastomeric filaments/fibers directly onto the foraminous belt in a substantially parallel configuration without the use of heated primary air to draw the filaments. A metallocene-catalyzed polyethylene resin available from DOW Chemical Company, under the trade designation of Dow Affinity^{®} XUS59400.03L, was used to produce the filaments at a nominal melt temperature of 220°C. The substantially parallel filaments were extruded through a spin beam with a nominal hole size of 0.07 cm and a density of 7 holes per cm. The velocity of the polymer through the spin beam and speed of the foraminous belt were adjusted to produce a web of fibers with a basis weight of about 21 grams per square meter. The filament web basis weight, the density of the capillaries in the spin beam, and the capillary size dictates the drawing ratio of the elastomeric filaments.

In the second bank in the meltblown process operates as a conventional meltblown head. The molten thermoplastic is extruded through fine die capillaries converging into a hot air stream, which attenuates the filaments of molten material reducing their diameter. The high velocity air stream carries these meltblown fibers to the constant speed foraminous surface. Such a process is disclosed for example in U.S. Pat. No. 3,849,241 to Butin. The meltblown head used here utilizes 0.0368 cm diameter capillaries at a density of 12 capillaries per cm, and operates at a melt temperature of 250°C. The elastomeric polymer used to produce the meltblown fibers is a dry blended resin in the following proportions: 80% Dow Affinity^{®} XUS59400.03L, 15% Regalrez 1126, and 5% Dow 6806. As the meltblown fibers are deposited on the foraminous surface carrying the simultaneously formed, substantially parallel filaments, autogeneous bonding occurs at discrete points where the still molten fibers cross over the filaments. The basis weight of the meltblown fibers portion of the web is about 9 grams per square meter.

The web is then cooled to a temperature less than about 35°C by drawing ambient air through the foraminous belt as the web travels over a vacuum box. This cooling is required prior to removing the web from the foraminous surface.

### Stretching

The web is transported to an S-wrap roll arrangement by a series of idler rollers. The S-wrap rollers are driven to control their speed, and this combined with the large surface contact serve as a nip. The speed of the foraminous meltblown forming belt and S-wrap rollers travel at about the same speed and this speed is 50% of the speed of the calender rolls. This speed difference results in a 100% elongation of the elastic web between the S-wrap rolls and the calender roll. This stretching effect reduces the basis weight by about 50% (*e.g*., due to web necking) and imparts significant stored energy to the elastomeric web as it is presented to be joined with the gatherable layers.

### Gatherable coform layers

The gatherable coform layers were comprised of intermingled polypropylene meltblown fibers and fiberized softwood pulp. The polypropylene comprised 40 weight percent of the gatherable layer with the softwood pulp comprising the remaining 60 weight percent. Each coform layer is an air formed matrix produced utilizing a coform process with two forming stations. At a first forming station two heated primary air streams operating at about 2 psig and containing polypropylene (available from BASELL under the trade designation PF-015) meltblown fibers, in an amount to form about a 7 gsm concentration of polypropylene at the surface of the layer, oppose each other at an angle of 60 degrees as measured off the horizontal plane of the forming wire and the air streams merge under turbulent conditions at a distance of approximately 15 cm above a constant speed foraminous surface. The merged air streams are then deposited upon the forminous surface, where upon a below surface vacuum pulls portions of the polypropylene through the surface to form a textured surface of the gathered layer. At the down stream forming station an air stream containing fiberized softwood pulp (available under the trade designation CF-405 from Weyerhaeuser Corporation) is merged with two heated primary air streams containing polypropylene (available from BASELL under the trade designation PF-015) meltblown fibers in an amount to form about a 33 gsm combined quantity of polypropylene that is homogenously mixed with absorbent fibers. The two polypropylene meltblown streams oppose each other at an angle of 90 degrees and the pulp air stream is contained between these streams at an angle of 45 degrees to each. The air streams merge under turbulent conditions at a distance of approximately 15 to 20 cm above a constant speed foraminous surface with the 7 gsm concentration of polypropylene thereon and the mixed pulp and polymer fibers are integrated with the polymer through mechanical entanglement to form the first gatherable layer of coherent integrated fibers having a textured surface. The second gatherable layer is formed in a similar fashion to the first.

The first and second gatherable layers are formed simultaneously by different forming stations on separate foraminous belting surfaces, which rotate in opposite directions conveying the coform layers toward each other. The coform layers are then removed from the foraminous surfaces and conveyed by conventional means to the vertical calender.

### Combining

After leaving the foraminous surfaces the first and second gatherable layers enter the embossing calender from opposite directions as shown in Figure 1. (Alternatively, the gatherable layers could be traveling from a foraminous surface in the same direction into a calender, and in yet in another embodiment these gatherable layers can be transferred from a wound roll rather than foraminous surface.)

The elastomeric web enters the calender between the two gatherable layers in an elongated state (about twice the formed length, or 100% elongation or more as desired), and could come from a separate foraminous surface as it does in the example, or from a wound roll. The smooth anvil roll and patterned calender roll bond the layers together at a plurality of discrete points in the configuration shown in Figure 7. The heated bond rolls and high pressure cause additional mechanical entanglement and thermal bonding of the polymers in the fabric. A temperature of 65°C and an embossing pressure of 21 kg per linear centimeter are used here.

### Retracting

As the composite web leaves the calender the stored energy in the elastomer is released as the web is conveyed at a decreasing linear speed through the process and the elastomeric core gathers the exterior gatherable layers. With the components described, the retraction occurs over a period of about 4 seconds and dictates an appropriate free web span for the given calender roll speed. For example if the calender roll has a linear speed of 5 meters per second then the web must be free to retract and decelerate over a distance of 20 meters. The exemplary composite web described herein retracts about 25% during this gathering step. This results in an increase in the basis weight of the web, corresponding to about 25%.

### Heat Activation

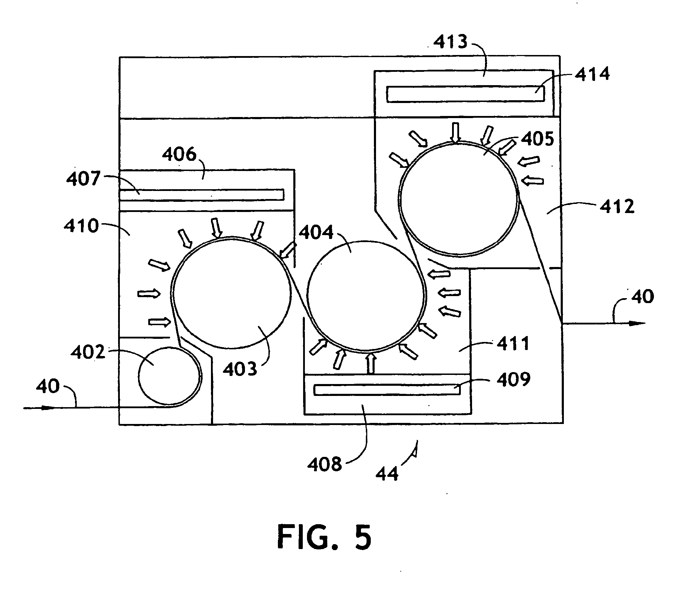

In order to obtain further retraction and increase the dimensional stability of the composite it is transferred to a foraminous drum in chamber 410 where it is held by vacuum. While held on the rotating, foraminous drum (*e.g*., 403 of Fig 5), or similar surface, the temperature of the web is elevated near the glass transition temperature (Tg) of the elastomeric center layer by drawing a heated air stream through the web. Monitoring the temperature of the elastomeric portion of the composite is not possible as it is located between the gatherable layers and therefore the temperature of the external gatherable layers is used to monitor the process and is measured as it exits transitions off the foraminous drum. This is a reasonable approximation as the heat transfer with the through-air process. The external web temperature required for this example is about 55°C. Once heated the web is transferred to a second vacuum drum in chamber 411 (*e.g*., 404 of Fig 5), or similar surface, through space. The web is then transferred to a subsequent vacuum drum in chamber 412, (e.g., 405 of Fig 5), which is traveling slower than the heated drums (approximately 5% for this example) and additional retraction occurs between the two surfaces. Again, an increase in basis weight of the web occurs. The second drum draws ambient air through the web reducing the temperature following the retraction step.

The fabric can then be converted into individual wipes using numerous cutting, folding, wetting, and/or stacking methods known in the art. The wipes may include no additives or may include a solution similar to that currently being used with Kleenex^{®} Huggies^{®} Supreme Care Scented baby wipes, which were commercially available from Kimberly-Clark Corporation, a business having offices located in Neenah, Wis. If, wet wipes, they may include about 330 weight percent of the solution based on the dry weight of the wipe. Alternative, the wipes may include only a wetting agent added to their surface, such as Masil SF 19 (more generically known as PEG-8 methicone) available from BSAF Corporation of USA. Yet alternatively, the wipes may include a solution like that disclosed in Example 3 and 4, and be substantially dry wipes.

### EXAMPLE 2

Following the procedure of Example 1, a composite elastic material is prepared using an elastomeric web containing 100% elastomeric meltblown fibers at a basis weight of 25 grams per square meter.

### EXAMPLE 3

A particularly suitable solution and method of application for a washcloth wipe is described as follows:

The chemical applied to the substrate can be any useful chemical or mixture of various chemicals that enhances the functionality of the substrate for its intended purpose. Possible chemical additives include, without limitation, strength additives, absorbency additives, softener additives, surfactant additives, conditioning additives, aesthetic additives such as fragrances or dyes. Other additives include, without limitation, anti-acne additives, antimicrobial additives, antifungal additives, antiseptic additives, antioxidants, cosmetic astringents, drug astringents, deodorants, detergents, emollients, external analgesics, binders, film formers, skin moisturizing ingredients as known in the art, opacifiers, skin conditioning agents, skin exfoliating agents, skin protectants, sunscreens, vapor rubs and the like. Suitable chemicals are disclosed in U.S. patent No. 5,840,403 issued to Troken et al. on Nov. 24, 1998, entitled *Multi-Elevational Tissue Paper Containing Selectively Disposed Papermaking Additive.* Additional suitable chemicals are disclosed in the previous incorporated references.

In one embodiment, the chemical applied to the substrate was a surfactant formulation comprising a concentrated (60 percent active ingredients) detergent system of a nonionic alkylpolyglucoside and zwitterionic amido betaine. High levels of a polyol, such as glycerin, allow the surfactant formulation to remain at a low viscosity for improved slot-coating capability during manufacturing. The lathering surfactants utilized in the surfactant formulation are Decyl Glucoside and Cocamidopropyl Betaine. Decyl Glucoside, from about 5 percent to about 40 percent of the total active ingredients of the surfactant formulation, is a mild, nonionic alkylpolyglucoside used for detergency and foam volume properties. Cocamidopropyl Betaine, from about 0.5 percent to about 25 percent of the total active ingredients of the surfactant formulation, is a high-foaming amphoteric detergent to deliver "quick" flash foam with minimal agitation upon dilution. Glycerin (a polyol), from about 0.5 percent to about 40 percent of the total active ingredients of the surfactant formulation, and PEG-7 Glyceryl Cocoate (a glyceryl ester), from about 0.5 percent to about 25 percent of the total active ingredients of the surfactant formulation, are both water-soluble conditioning agents or humectants/emollients designed to deliver moisture to the skin. Glycerin has a secondary function in the surfactant formulation as a diluent to lower the surfactant formulation's viscosity for improved slot-coating capability when applying the surfactant formulation to the substrate manufacturing. DMDM Hydantoin as a bactericide, about 0.4 percent of the total active ingredients of the surfactant formulation, and lodopropynyl Butylcarbamate as a fungicide, about 0.03 percent of the total active ingredients of the surfactant formulation, act together as a preservative system for the surfactant formulation. A fragrance (Shaw Mudge 62526M) containing lavender and chamomile extracts, from about 0.1 percent to about 1 percent of the.total active ingredients of the surfactant formulation, provides a lavender and chamomile baby scent. The remaining component was approximately 40 percent water, which serves as a diluent or solvent to keep the surfactant formulation in a pourable/pumpable, fluid state. Other formulations can comprise from about 30 percent to about 90 percent active ingredients with the balance water.

The chemical may be applied onto, adjacent to, or impregnated into the substrate by any means known in the art. The chemical may also be placed between or adjacent to any of the layers within a multi-layer substrate, or applied to or impregnated into any of the layers. The chemical may be applied to the substrate, the substrate folded, and then the substrate allowed to dry after being packaged. Since the chemical can be placed onto an interior surface after folding, it is not necessary to dry the substrate prior to either folding or packaging, saving a processing step. Alternatively, the substrate can be dried after the chemical is applied, folded, and then packaged.

Suitable chemical application methods include, but are not limited to, flexographic printing, rotogravure printing, offset printing, letterpress, direct gravure coating, offset gravure coating, reverse roll coating, flexographic coating, slot coating, dip coating, rod coating, knife coating, air knife coating, blade coating, slide coating, curtain coating, spraying, hot melt spraying, foam application, and extrusion. Further information on coating methods is disclosed in Modern Coating and Drying, Edward Cohen and Edgar Gutoff, 1992 VCH Publishers, Inc.

The chemical may be added or applied to the substrate in any effective amount. The addition rate will depend to some degree on the chemical being applied and the type of substrate that the chemical is applied to. In various embodiments of the invention, the chemical addition rate can be between about 1 percent to about 400 percent based on the substrate's weight or between about 10 percent to about 200 percent based on the substrate's weight.

### EXAMPLE 4

Following the procedure of Example 1, a 115 gsm (grams per square meter) composite or multi-layer substrate comprising three layers with an applied chemical was made. Each of the substrate's two outer surface layers comprised a 34.5 gsm coform material having 60 percent pulp fiber identified as CF405 fiberized southern softwood pulp available from Weyerhauser and 40 percent polymeric fibers identified as PF-015 polypropylene meltblown available from Basell. The substrate's inner layer comprised a 23 gsm elastomeric material comprised of a mixture of polyethylene materials that are sold by Dow Chemical. Seventy percent (70%) of the inner layer comprised filaments of Dow Affinity XUS59400.03L, a metallocene-catalyzed polyethylene. Thirty percent (30%) of the inner layer comprised fibers of a mixture of 80 percent Dow Affinity XUS59400.03L, 15 percent Regalrez 1126 Tackifier, and 5 percent Dow DNDN 1077, a linear low density polyethylene.

After the substrate was made, the substrate was coated with a solution. The surfactant formulation of Example 3 was applied at a rate of about 4 grams per sheet. After slot coating, the substrate was folded as taught in the December 17, 2003 pending patent application. The folded substrate was stacked with other identically prepared folded substrates. A stack of approximately fourteen (14) individually folded substrates was then packaged into a paperboard carton as illustrated in the December 17, 2003 pending patent application. The folded wipes may dry due to evaporation occurring during manufacturing and/or from the carton after packaging. Due to either natural evaporation (i.e., without any dry step in the process) or by applying a reduced moisture content formulation, the coated substrate can become a substantially dry substrate for certain applications. If desired, the interior of the carton can be coated with a coating to make the carton more impervious to liquids during the drying phase or to provide increased resistance to the chemicals contained in the formulation.

The substrate produced herein is useful for a disposable washcloth. By placing the washcloth in water, the relatively dry surfactant formulation is activated. The activated formulation and washcloth can be used for surface cleaning, body cleaning and the like. The formulation may be a low foaming to high foaming composition and may generate lather, all to assist in cleaning and/or conditioning with the washcloth.

Figure 7 shows a graphic illustration of a plan view of a surface portion of a wipe 1000 created according to the processes described herein but without a textured surface. As discussed above, elastic filaments 1010, schematically depicted in Figure 7 as dashed lines, extend in the machine direction (MD). Wipe 1000 includes a plurality of bonding points 1020 arranged in non-linear waves which are orthogonal to the machine direction (MD) indicated by arrow 1005. For clarity of illustration, only a few bonding points 1020 are labeled with reference numerals. The bonding points 1020 are created by the bonding roller arrangement 20, 22 as the elastic layer 12 and gatherable layers 24 and 28 pass through the bonding roller arrangement. While the illustrated embodiment has numerous bonding points 1020, it is understood that one embodiment requires fewer bonding points than illustrated in Figure 7, such as only two bonding points 1020.

### EXAMPLE 5

The heat activation is accomplished with a composite elastic material described herein, as follows. Additional discussion of the heat activation here is found in published application entitled "Method and Apparatus for Controlling Retraction of Composite Materials" and known as WO 02/053368A2. To get a targeted retraction, for a sample material prepared according to the invention (such as described in Example 1), of -20 %, the material is passed through a heat activation unit under the conditions below. The speeds of the material on the rollers are as follows:
Calender speed 20, 22 = 580 feet per minute (fpm) +/- about 10 fpm.
First heated roll 403 = 398 fpm +/- about 5 fpm.
Second heated roll 404 = 398 fpm +/- about 5 fpm.
Quench roll 405 = 382 fpm +/- about 5 fpm.
Winder 42 = 421 fpm +/- about 5 fpm.

The material (SBL, sheet) is allowed to slowly retract as it travels toward the heat activation unit. After entering the heat activation unit 44, the sheet is heated in the first chamber 410 on roller 403 and in the second chamber 411 on roller 404. After heat activation the SBL is cooled in the chamber 412 on subsequent (quench) roller 405. The temperatures for a composite material as described in Example 1 and 4 (measured with a conventional surface temperature determining infrared gun) are as follows:
Sheet temperature on roll 402 = 89 °F +/- about 5 °F.
Sheet temperature exiting roll 404 = 94 °F +/- about 5 °F.
Sheet temperature exiting roll 405 = 85 °F +/- about 3 °F.
Sheet temperature entering winder roll 42 = 84 ° F +/- about 5 F.

As the material exits the heat activation unit 44 it is stretched about +4% between the roll 405 and the winder 42, *i.e*., the sheet is tensioned as it is wound up slightly below the softening point T_{g} of the elastomer and then allowed to fully relax on the roll. This stretching provides sheet modulus into the material so that a good quality roll can be made with conventional winding machines (e.g., surface winding technology). The composite material product, after heat activation, has the retraction controlled. In addition, the SBL product has less variability in attributes such as, basis weight, thickness, stretch to stop, and percent retraction, particularly after the material is converted into individual wipes.

### TEST METHODS

The testing set forth herein is performed where wipe, or layer(s) as applicable, samples are conditioned 24 hours and tested under TAPPI standard conditions of 23 ± 1°C and 50 ± 2%RH. The test equipment discussed is exemplary and should be used to conduct the testing, however, alternative equipment that is equivalent in all material respects for the given test can be used also (but in the event of conflict between test results the test results from the exemplary equipment shall control).

### Peak to Valley Ratio measurement

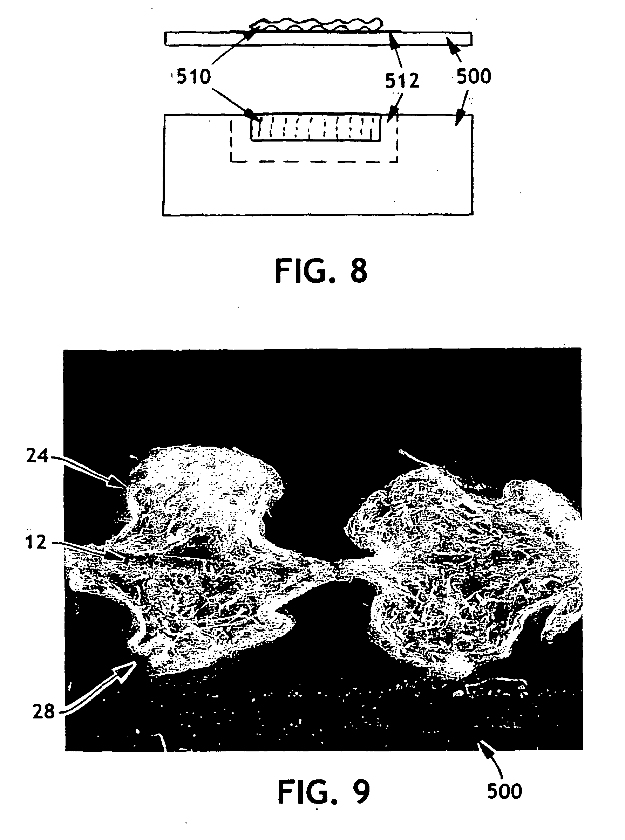

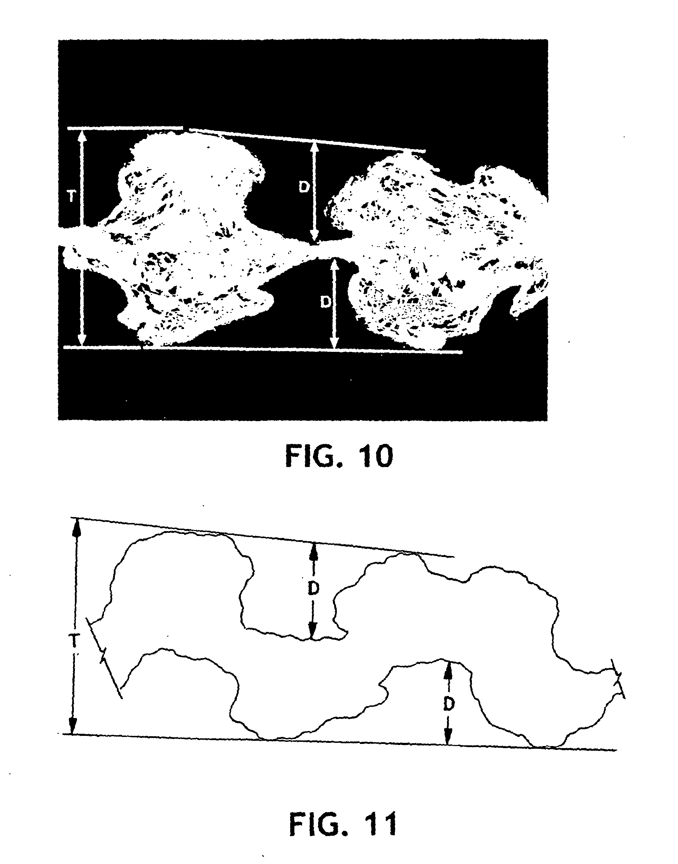

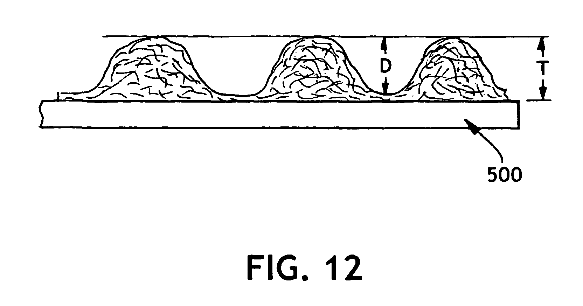

The "Peak to Valley Ratio" of a wipe, or its layers, of the invention is found with the aid of an optical microscope, camera and calibrated measurement system of sections of the wipe, or its layers, that are cut parallel to the MD of the wipe (and where if the MD is not identifiable for the wipe then the dimension of the wipe have the greatest tensile strength is considered the MD), for the relevant portion of the wipe (e.g., the wipe or just the layer(s)) in reference to Figures 8 to 12, as follows:
1. 1¼ inch long by ½ inch wide strips 510 are cut with scissors from the sample wipe (or its layer(s) as applicable) such that the long direction of the strip is oriented parallel to the MD. Ten such strips 510 are removed from at least five distinct wipe (or its layer(s) as applicable) samples, two strips per sample.
2. The strips are immersed in a liquid nitrogen bath and are cleaved in half along their length in a manner similar to the method for preparing tissue paper cross-sections, as per US Patent No. 5,743,999 (Kamps, et. al., 1998). Due to the more robust nature of the wipes as compared to the fragile tissues, there is no need to sandwich multiple wipes and confine them with adhesive tape. A strip of card stock such as an index card can be used underneath the sample strip to allow for complete and even cutting in a single stroke.
3. The cleaved strips are removed from the liquid nitrogen and warmed to room temperature (i.e., TAPPI standard testing conditions).
4. One half of each cleaved pair is mounted so that the cut edge faces upwards for viewing through a microscope (e.g., a W ILD-Heerbrug Model M-420 macroscope (a dissecting/inspection microscope) distributed by Leica Microsystems of Bannockburn, IL). Attachment with double-stick tape 512 onto a glass microscope slide 500 (Figure 8 - mounting of a cross-section on glass slide 500, where an edge view mounting orientation is shown above a top view mounting orientation) aids in the handling, orienting and proper illumination of the cross-section of the strip 510.
5. Illumination (e.g., with an Intralux 6000 illuminator with twin fiber-optic light guides from Volpi Manufacturing USA of Auburn, NY) is with very low angle, almost grazing angle illumination from the left and right, to produce a dark-field effect in which the sample is bright against a dark background (Figure 9 - part of a machine direction cross-section of the sample of a wipe).
6. All or portions of the cross-section are imaged with a camera (e.g., a DP-10 digital camera from Olympus America Inc. of Melville, NY), either digital or film, in which the desired dimensions can be measured.
7. From the cross-sections, the valley depth D is measured (e.g., employing a Via-100 Video Measurement System from Boeckeler Instruments, Inc. of Tucson, AZ and DXC-930 3CCD color video camera from Sony Corporation of America, of USA).
8. Valley depth D is measured from the line tangential to the two adjacent ridge peaks and dropped perpendicular to the centerline of the sample, to the base of the valley. Figure 10 shows valley depth D and wipe thickness T dimensions for a wipe when peaks and valleys are in phase. Figure 11 shows valley depth D and wipe thickness T dimensions for a wipe when peaks and valleys are in most out of phase, it being understood that measurements in the range from being in phase to out of phase are taken and evaluated as discussed herein. Figure 12 shows valley depth D and layer thickness T dimensions for a layer of a wipe (i.e., the layer apart from other layers that make be use to make a wipe). The thickness T and valley depth D shown in Figures 10 to 12 are for illustration only.
9. For wipe samples (Figures 9-11), the valley depth D is measured for the valleys on a top surface (i.e., relative to the surface of the wipe that contacts a surface when wiping) of the sample using the above steps. The measurements of each valley depth D for all five samples top surface are added together and then divided by the total number of valleys measured, to determine the wipe top surface average valley depth D. Similarly, the valley depth D is measured for the valleys on a bottom surface (i.e., relative to the surface of the wipe that contacts a surface when wiping) of the wipe samples using the above steps. The measurements of each valley depth D for all five samples bottom surface are added together and then divided by the total number of valleys measured, to determine the wipe bottom surface average valley depth D. The wipe top surface average valley depth D is added to the wipe bottom surface average valley depth D, to determine the wipe overall valley depth (i.e., D (of top surface) plus D (of bottom surface)).
10. For layer(s) samples (Figure 12), the valley depth D is measured for the valleys on a top surface (i.e., relative to the surface of the wipe that contacts a surface when wiping) of the sample using the above steps. The measurements of each valley depth D for all five samples top surface are added together and then divided by the total number of valleys measured, to determine the layer(s) top surface average valley depth D.
11. The thickness of the sample (e.g., wipe or its layer(s) as applicable) is determined using the Thickness measurement method herein. Once the thickness of the five samples is measured, the five thickness values are added together and the total divided by five to determine the Thickness T for the wipe, or Thickness T for its layer(s), as applicable.
12. The Layer Peak To Valley Ratio, as discussed herein and used in the claims, is defined as the result of the layer Thickness T divided by the layer top surface average valley depth D (i.e., T/D for the layer).
13. The Wipe Peak To Valley Ratio, as discussed herein and used in the claims, is defined as the result of the wipe Thickness T divided by the wipe overall valley depth D (i.e., T/D for the wipe).

### Thickness measurement

The "Thickness" of a wipe, or its layer(s) as applicable, of the invention is found using the Compression Tester model KES-FB-3 manufactured by Kato Tech Co., Ltd in Japan. The thickness of a sample is found by a single cycle compression of the sample between two circular stainless steel plungers of an area of 2 cm² each. The velocity of compression is 20 micron/sec. When the pressure attains a level of 50 grams force/cm² (gf/cm²) the top plunger retracts at the same velocity of 20 micron/sec. and recovery of the compressed material begins. The thickness is taken during the compression of the sample at the pressure of 0.5 gf/cm² as the plungers first move towards each other. The size of the sample needs to be large enough to cover the 2 cm² area of the circular stainless steel plungers but not so large that it interferes with the test or test equipment. Five samples are tested in this manner and the thickness in millimeters for each sample is added together and the collective total thickness divided by 5, which thereby determines the Thickness of the wipe, or its layer(s) as applicable, which is discussed herein and set forth in the claims.

### Bending Stiffness measurement

The "Bending Stiffness" of a wipe of the invention is measured using the Bending Tester model KES-FB-2 manufactured by Kato Tech Co., Ltd in Japan. The wipe samples are conditioned 24 hours and tested under TAPPI standard conditions of 23 ± 1°C and 50 ± 2 %RH. Samples are prepared by cutting a portion of the wipe to size, which size may vary depending on availability and could range from 1 cm to 20 cm in length and at least 5 cm in width to allow for proper clamping of the sample between the front and back chucks of the equipment. The sample is not limited to a square shape and could be a rectangular shape. Ultimately, the data is normalized by the length of the sample on per a centimeter basis, so size is not a determinative factor in the test. The Bending Tester bends the sample in the range of curvatures of ± 2.5 cm⁻¹ at a constant rate of 0.5 cm⁻¹/sec. The bending stiffness is defined as the mean of slopes of plots of bending moment (with a unit of gf cm²/cm) vs. curvature (cm⁻¹) when the sample is bent in both sides (i.e. wire and anvil sides). For the purpose of calculation of slopes, the curvature between 0.5 and 1.5 cm⁻¹ is considered as the forward bending of the face side (e.g. wire side) of the sample while the curvature between -0.5 and -1.5 cm⁻¹ is considered as the backward bending of the other face side (e.g. anvil side) of the sample. However, it is not necessary to have the forward or backward bending associated with a given side of the sample (i.e. wire or anvil side).

Since the MD and CD of a product is not always easily identified, each sample is tested as above in one direction and then the other direction which is perpendicular to the first direction relative to a two dimensional plane of the surface of the wipe. Five samples are tested and the bending stiffness of both directions (e.g., MD and CD, or their equivalents if not known per the perpendicular orientation set forth here) in grams force cm²/cm (gf cm²/cm) is added together and divided by two and reported as the average bending stiffness for each sample. The five samples' average bending stiffnesses are added together and the collective total average bending stiffness is divided by 5, which thereby determines the Bending Stiffness of the wipe, which is discussed herein and set forth in the claims.

### Basis Weight measurement

The Basis Weight (in grams per square meter, g/m² or gsm) of a wipe is calculated by dividing the dry weight by the area (in square meters) after manufacture of the wipe and before coating with any additive or treatment.

### Density measurement

The Density of a wipe, as used herein, is a "dry density" and is calculated as the Basis Weight (in grams per square meter, g/m² or gsm) divided by the Thickness of the wipe after manufacture and before coating with any additive or treatment.

The invention has been described with reference to various specific and preferred embodiments and techniques. However, it should be understood that many variations and modifications may be made while remaining within the scope of the invention which is defined according to the claims appended hereto.

## Claims

1. A wipe comprising a non-woven composite material comprising:
at least one non-woven inner layer (12), wherein the inner layer (12) is elastic and comprises an elastic web, elastic fibers, elastic filaments or any combinaton thereof;
at least one non-woven outer layer (24, 28), wherein the outer layer is textured and has a Layer Peak To Valley Ratio greater than 1 and less than about 4 and is bonded to the inner layer at at least two points, the textured outer layer (24, 28) is a gatherable layer, and is coform nonwoven composite material of art-formed matrix material comprising thermoplastic polymeric meltblown fibers and a multiplicity of individualised absorbent fibers, the coform material having a concentration of polymer at an outer surface; and
wherein the composite material has a Wipe Peak To Valley Ratio greater than 1 and less than about 4.

2. A wipe comprising a non-woven composite material comprising:
at least one non-woven inner layer (12), wherein the inner layer (12) is elastic and comprises an elastic web, elastic fibers, elastic filaments or any combination thereof;
at least one non-woven outer layer (24, 28), wherein the outer layer is textured and is bonded to the inner elastic layer at at least two points, the textures outer layer (24, 28) is a gatherable layer, and is coform nonwoven composite material of air-formed matrix material comprising thermoplastic polymeric meltblown fibers and a multiplicity of individualised absorbent fibers, the coform material having a concentration of polymer at an outer surface; and
wherein the composite material has a Basis Weight between about 100 gsm and about 130 gsm and a Bending Stiffness greater than zero gf cm²/cm and less than 1 gf cm²/cm and a Thickness greater then 1.5 millimeters.

3. A wipe according to claim 2, wherein the outer layer (24, 28) has a Layer Peak To Valley Ratio greaser than 1 and less than about 4 and is bonded to the inner layer at least two points, wherein the composite material has a Wipe Peak To Valley Ratio greater than 1 and less then about 4.

4. The wipe of claims 2 or 3, wherein the Bending Stiffness is selected from the group comprising: less than about 0.8 gf cm²/cm, less than about 0.6 gf cm²/cm, less than about 0.4 gf cm²/cm or less than about 0.2 gf cm²/cm.

5. The wipe of claims 2 or 3, wherein the Thickness is selected from the group comprising greater than about 2 mm, greater than about 2.5 mm or greater than about 3 mm.

6. The wipe of claim 4, wherein the Thickness is selected from the group comprising; greater than about 2 mm, greater than about 2.5 mm or greater than about 3 mm.

7. The wipe of any preceding claim, wherein the elastic inner layer (12) comprises elastic filaments bound to elastic fibers and two gatherable outer layers (24, 28) comprising coform and wherein the elastic inner layer is positioned between the two gatherable outer layers.

8. The wipe of any preceding claim, further comprising a liquid disposed on or within at least one of the layers and the wipe being a wet wipe.

9. The wipe of any of claims 1 to 7, further comprising a liquid disposed on or within at least one of the layers and the wipe being substantially dry.

10. The wipe of claim 8, wherein the liquid is a surfactant formulation.

11. The wipe of claims 1 or 3, wherein the Layer Peak To Valley Ratio is less than about 3.

12. The wipe of claims 1 or 3, wherein the Layer Peak To Valley Ratio is less than about 2.

13. The wipe of claim 1 or 3, wherein the Wipe Peak To Valley Ratio is less than about 3.

14. The wipe of claims 1 or 3, wherein the Wipe Peak To Valley Ratio is less than about 2.

15. The wipe of claim 14, wherein the Wipe Peak To Valley Ratio is less than about 3.

16. The wipe of claim 15, wherein the Wipe Peak To Valley Ratio is less than about 2.

17. The wipe of any preceding claim, wherein the texturing comprises three-dimensional cloth-like tufts projecting from the surface of the outer layer(s) and formed in a non-random plurality of spaced apart tufts.

## Patentansprüche

1. Wischtuch, umfassend ein Nonwoven-Verbundmaterial, das Folgendes umfasst:
mindestens eine Nonwoven-Innenschicht (12), wobei die Innenschicht (12) elastisch ist und ein elastisches Gewebe, elastische Fasern, elastische Filamente oder eine beliebige Kombination davon umfasst;
mindestens eine Nonwoven-Außenschicht (24, 28), wobei die Außenschicht texturiert ist und ein Rauhigkeitsspitze-zu-Talbereich-Verhältnis der Schicht von mehr als 1 und weniger als etwa 4 besitzt und mit der Innenschicht an mindestens zwei Punkten verbunden ist, die texturierte Außenschicht (24, 28) eine raffbare Schicht ist und Coform-Nonwoven-Verbundmaterial von luftgeformten Matrixmaterial ist, das thermoplastische, polymere, schmelzgeblasene Fasern und eine Vielzahl an individualisierten absorbierenden Fasern umfasst, wobei das Coform-Material eine Konzentration an Polymer an einer Außenoberfläche aufweist; und
wobei das Verbundmaterial ein Rauhigkeitsspitze-zu-Talbereich-Verhältnis beim Wischtuch von mehr als 1 und weniger als etwa 4 besitzt.

2. Wischtuch, umfassend ein Nonwoven-Verbundmaterial, das Folgendes umfasst:
mindestens eine Nonwoven-Innenschicht (12), wobei die Innenschicht (12) elastisch ist und ein elastisches Gewebe, elastische Fasern, elastische Filamente oder eine beliebige Kombination davon umfasst;
mindestens eine Nonwoven-Außenschicht (24, 28), wobei die Außenschicht texturiert ist und mit der elastischen Innenschicht an mindestens zwei Punkten verbunden ist, die texturierte Außenschicht (24, 28) eine raffbare Schicht ist und Coform-Nonwoven-Verbundmaterial von luftgeformtem Matrixmaterial ist, das thermoplastische, polymere, schmelzgeblasene Fasern und eine Vielzahl an individualisierten absorbierenden Fasern umfasst, wobei das Coform-Material eine Konzentration an Polymer an einer Außenoberfläche aufweist; und
wobei das Verbundmaterial ein Flächengewicht zwischen etwa 100 gsm und etwa 130 gsm und eine Biegesteifigkeit von größer als null gf cm²/cm und weniger als 1 gf cm²/cm und eine Dicke von mehr als 1,5 Millimeter besitzt.

3. Wischtuch gemäß Anspruch 2, wobei die Außenschicht (24, 28) ein Rauhigkeitsspitze-zu-Talbereich-Verhältnis der Schicht von mehr als 1 und weniger als etwa 4 besitzt und mit der Innenschicht an mindestens zwei Punkten verbunden ist, wobei das Verbundmaterial ein Rauhigkeitsspitze-zu-Talbereich-Verhältnis beim Wischtuch von mehr als 1 und weniger als etwa 4 besitzt.

4. Wischtuch gemäß Anspruch 2 oder 3, wobei die Biegesteifigkeit aus der Gruppe gewählt ist, die folgendes umfasst: weniger als etwa 0,8 gf cm²/cm, weniger als etwa 0,6 gf cm²/cm, weniger als etwa 0,4 gf cm²/cm oder weniger als etwa 0,2 gf cm²/cm.

5. Wischtuch gemäß Anspruch 2 oder 3, wobei die Dicke aus der Gruppe gewählt ist, die folgendes umfasst: mehr als etwa 2 mm, mehr als etwa 2,5 mm oder mehr als etwa 3 mm.

6. Wischtuch gemäß Anspruch 4, wobei die Dicke aus der Gruppe gewählt ist, die folgendes umfasst: mehr als etwa 2 mm, mehr als etwa 2,5 mm oder mehr als etwa 3 mm.

7. Wischtuch gemäß einem beliebigen der vorausgehenden Ansprüche, wobei die elastische Innenschicht (12) elastische Filamente, die an elastische Fasern gebunden sind, und zwei raffbare Außenschichten (24, 28) die Coform-Material umfassen, umfasst, und wobei die elastische Innenschicht zwischen den zwei raffbaren Außenschichten positioniert ist.

8. Wischtuch gemäß einem beliebigen der vorausgehenden Ansprüche, weiterhin umfassend eine auf oder innerhalb mindestens einer der Schichten vorgesehene Flüssigkeit und wobei das Wischtuch ein Nasswischtuch ist.

9. Wischtuch gemäß einem beliebigen der Ansprüche 1 bis 7, weiterhin umfassend eine auf oder innerhalb mindestens einer der Schichten vorgesehene Flüssigkeit und wobei das Wischtuch im Wesentlichen trocken ist.

10. Wischtuch gemäß Anspruch 8, wobei die Flüssigkeit eine Surfaktantformulierung ist.

11. Wischtuch gemäß den Ansprüchen 1 oder 3, wobei das Rauhigkeitsspitze-zu-Talbereich-Verhältnis bei der Schicht weniger als etwa 3 beträgt.

12. Wischtuch gemäß den Ansprüchen 1 oder 3, wobei das Rauhigkeitsspitze-zu-Talbereich-Verhältnis bei der Schicht weniger als etwa 2 beträgt.

13. Wischtuch gemäß den Ansprüchen 1 oder 3, wobei das Rauhigkeitsspitze-zu-Talbereich-Verhältnis bei dem Wischtuch weniger als etwa 3 beträgt.

14. Wischtuch gemäß den Ansprüchen 1 oder 3, wobei das Rauhigkeitsspitze-zu-Talbereich-Verhältnis bei dem Wischtuch weniger als etwa 2 beträgt.

15. Wischtuch gemäß Anspruch 14, wobei das Rauhigkeitsspitze-zu-Talbereich-Verhältnis bei dem Wischtuch weniger als etwa 3 beträgt.

16. Wischtuch gemäß den Anspruch 15, wobei das Rauhigkeitsspitze-zu-Talbereich-Verhältnis bei dem Wischtuch weniger als etwa 2 beträgt.

17. Wischtuch gemäß einem beliebigen der vorausgehenden Ansprüche, wobei die Texturierung dreidimensionale tuchartige Büschel umfasst, die aus der Oberfläche der Außenschicht(en) hervortreten und in einer nicht-zufälligen Vielzahl von voneinander beabstandeten Büscheln gebildet sind.

## Revendications

1. Lingette comprenant un matériau composite non-tissé, comprenant :
au moins une couche intérieure non-tissée (12), la couche intérieure (12) étant élastique et comprenant un voile élastique, des fibres élastiques, des filaments élastiques ou toute combinaison de ceux-ci ;
au moins une couche extérieure non-tissée (24,28), la couche extérieure étant texturée, ayant un Rapport Pic:Vallée de Couche supérieur à 1 et inférieur à environ 4 et étant liée à la couche intérieure en au moins deux points, le couche extérieure texturée (24,28) étant une couche fronçable et étant un matériau coformé composite non-tissé d'un matériau de matrice formé par voie aérodynamique comprenant des fibres polymères thermoplastiques obtenues par extrusion-soufflage et une multiplicité de fibres absorbantes individualisées, le matériau coformé ayant une concentration en polymère au niveau d'une surface extérieure ; et
le matériau composite ayant un Rapport Pic:Vallée de Lingette supérieur à 1 et inférieur à environ 4.

2. Lingette comprenant un matériau composite non-tissé, comprenant :
au moins une couche intérieure non-tissée (12), la couche intérieure (12) étant élastique et comprenant un voile élastique, des fibres élastiques, des filaments élastiques ou toute combinaison de ceux-ci ;
au moins une couche extérieure non-tissée (24,28), la couche extérieure étant texturée et liée à la couche intérieure élastique en au moins deux points, le couche extérieure texturée (24,28) étant une couche fronçable et étant un matériau coformé composite non-tissé d'un matériau de matrice formé par voie aérodynamique comprenant des fibres polymères thermoplastiques obtenues par extrusion-soufflage et une multiplicité de fibres absorbantes individualisées, le matériau coformé ayant une concentration en polymère au niveau d'une surface extérieure ; et
le matériau composite ayant une Masse Surfacique comprise entre environ 100 g/m² et environ 130 g/m², une Rigidité en Flexion supérieure à 0 gf cm²/cm et inférieure à 1 gf cm²/cm et une Epaisseur supérieure à 1,5 millimètre.

3. Lingette selon la revendication 2, dans laquelle la couche extérieure (24,28) a un Rapport Pic:Vallée de Couche supérieur à 1 et inférieur à 4 et est liée à la couche intérieure en au moins deux points, et le matériau composite a un Rapport Pic:Vallée de Lingette supérieur à 1 et inférieur à 4.

4. Lingette selon la revendication 2 ou 3, dans laquelle la Rigidité en Flexion est sélectionnée dans le groupe comprenant : inférieur à environ 0,8 gf cm²/cm, inférieur à environ 0,6 gf cm²/cm, inférieur à environ 0,4 gf cm²/cm ou inférieur à environ 0,2 gf cm²/cm.

5. Lingette selon la revendication 2 ou 3, dans laquelle l'Epaisseur est sélectionnée dans le groupe comprenant : supérieure à environ 2 mm, supérieure à environ 2,5 mm ou supérieure à environ 3 mm.

6. Lingette selon la revendication 4, dans laquelle l'Epaisseur est sélectionnée dans le groupe comprenant : supérieure à environ 2 mm, supérieure à environ 2,5 mm ou supérieure à environ 3 mm.

7. Lingette selon l'une quelconque des revendications précédentes, dans laquelle la couche intérieure élastique (12) comprend des filaments élastiques liés à des fibres élastiques et a deux couches extérieures fronçables (24,28) comprenant le coformé et dans laquelle la couche intérieure élastique est positionnée entre les deux couches extérieures fronçables.

8. Lingette selon l'une quelconque des revendications précédentes, comprenant, en outre, un liquide disposé sur, ou au sein de, l'une au moins des couches, la lingette étant une lingette humide.

9. Lingette selon l'une quelconque des revendications 1 à 7, comprenant, en outre, un liquide disposé sur, ou au sein de, l'une au moins des couches, la lingette étant une lingette sensiblement sèche.

10. Lingette selon la revendication 8, dans laquelle le liquide est une formulation de tensioactif.

11. Lingette selon la revendication 1 ou 3, dans laquelle le Rapport Pic:Vallée de Couche est inférieur à environ 3.

12. Lingette selon la revendication 1 ou 3, dans laquelle le Rapport Pic:Vallée de Couche est inférieur à environ 2

13. Lingette selon la revendication 1 ou 3, dans laquelle le Rapport Pic:Vallée de Lingette est inférieur à environ 3.

14. Lingette selon la revendication 1 ou 3, dans laquelle le Rapport Pic:Vallée de Lingette est inférieur à environ 2.

15. Lingette selon la revendication 14, dans laquelle le Rapport Pic:Vallée de Lingette est inférieur à environ 3.

16. Lingette selon la revendication 15, dans laquelle le Rapport Pic:Vallée de Lingette est inférieur à environ 2.

17. Lingette selon l'une quelconque des revendications précédentes, dans lequel la texturation comprend des touffes tridimensionnelles semblables à de l'étoffe se projetant depuis la ou les couches extérieures et qui sont disposées selon une pluralité non-aléatoires de touffes espacées les unes des autres.
